# EUROPEAN PATENT APPLICATION

(11) **EP 4 518 398 A1**
(43) Date of publication of application: **05.03.2025**
(21) Application number: 23795275.9
(22) Date of filing: 23.04.2023
(51) Int. Cl.: H04W 16/28

(54) **BEAM INFORMATION DETERMINATION METHOD, AND TERMINAL AND NETWORK-SIDE DEVICE**

(30) Priority: 25.04.2022 CN 202210444324
(71) Applicant: Vivo Mobile Communication Co., Ltd., Dongguan, Guangdong 523863 (CN)
(72) Inventor: YANG, Yu, Dongguan, Guangdong 523863 (CN)
(74) Representative: Cabinet Beaumont
(86) International application number: PCT/CN2023/090057
(87) International publication number: WO 2023/207842

(57) **Abstract**

This application discloses a beam information determining method, a terminal, and a network-side device, and pertains to the field of communication technologies. The beam information determining method in embodiments of this application includes: receiving, by a terminal, first indication information from a network-side device, where the first indication information is used for indicating at least one transmission configuration indicator TCI state; and determining, by the terminal, a target TCI state of a target signal from the at least one TCI state in a case that the terminal determines to use a TCI state indicated by the first indication information for the target signal, where the target TCI state is used for determining common beam information of the target signal.

## Description

### CROSS-REFERENCE TO RELATED APPLICATIONS

This application claims priority to Chinese Patent Application No. 202210444324.9, filed in China on April 25, 2022, which is incorporated herein by reference in its entirety.

### TECHNICAL FIELD

This application pertains to the field of communication technologies, and specifically, relates to a beam information determining method, a terminal, and a network-side device.

### BACKGROUND

After beam measurement and beam reporting, a network may indicate a beam for a channel or a reference signal in downlink or uplink, to establish a beam link between the network and user equipment (User Equipment, UE) to transmit the channel or the reference signal. In a unified transmission configuration indicator (Transmission Configuration Indicator, TCI) framework (unified TCI framework), one beam (beam) indicated by a network by using a Media Access Control control element (Media Access Control Control Element, MAC CE) and/or downlink control information (Downlink Control Information, DCI) may be used for transmission in a plurality of channels. Usually, beam information may be represented by TCI state information.

Currently, there is no solution about how to determine beam information of a channel or a reference signal in a multi-transmission or reception point (Transmission or reception point, TRP) scenario.

### SUMMARY

Embodiments of this application provide a beam information determining method, a terminal, and a network-side device, to resolve a problem about how to determine beam information of a channel or a reference signal in a multi-TRP scenario.

According to a first aspect, a beam information determining method is provided. The method includes:
receiving, by a terminal, first indication information from a network-side device, where the first indication information is used for indicating at least one transmission configuration indicator TCI state; and
determining, by the terminal, a target TCI state of a target signal from the at least one TCI state in a case that the terminal determines to use a TCI state indicated by the first indication information for the target signal, where the target TCI state is used for determining common beam information of the target signal.

According to a second aspect, a beam information determining apparatus is provided, including:
a receiving module, configured to receive first indication information from a network-side device, where the first indication information is used for indicating at least one transmission configuration indicator TCI state; and
a determining module, configured to determine, for the terminal, a target TCI state of a target signal from the at least one TCI state in a case of determining to use a TCI state indicated by the first indication information for the target signal, where the target TCI state is used for determining common beam information of the target signal.

According to a third aspect, a beam information determining method is provided. The method includes:
sending, by a network-side device, first indication information, where the first indication information is used for indicating at least one transmission configuration indicator TCI state; and
determining, by the network-side device, a target TCI state of a target signal from the at least one TCI state, where the target TCI state is used for determining common beam information of the target signal.

According to a fourth aspect, a beam information determining apparatus is provided, including:
a sending module, configured to send first indication information, where the first indication information is used for indicating at least one transmission configuration indicator TCI state; and
a determining module, configured to determine a target TCI state of a target signal from the at least one TCI state, where the target TCI state is used for determining common beam information of the target signal.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided, including a processor and a communication interface. The communication interface is configured to receive first indication information from a network-side device, where the first indication information is used for indicating at least one transmission configuration indicator TCI state. The processor is configured to determine a target TCI state of a target signal from the at least one TCI state in a case of determining to use a TCI state indicated by the first indication information for the target signal, where the target TCI state is used for determining common beam information of the target signal.

According to a seventh aspect, a network-side device is provided. The network-side device includes a processor and a memory. The memory stores a program or instructions capable of running on the processor. When the program or instructions are executed by the processor, the steps of the method according to the third aspect are implemented.

According to an eighth aspect, a network-side device is provided, including a processor and a communication interface. The communication interface is configured to send first indication information, where the first indication information is used for indicating at least one transmission configuration indicator TCI state. The processor is configured to determine a target TCI state of a target signal from the at least one TCI state, where the target TCI state is used for determining common beam information of the target signal.

According to a ninth aspect, a communication system is provided, including a terminal and a network-side device. The terminal may be configured to perform the steps of the beam information determining method according to the first aspect. The network-side device may be configured to perform the steps of the beam information determining method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect, or implement the steps of the method according to the third aspect.

According to a twelfth aspect, a computer program or program product is provided. The computer program or program product is stored in a storage medium. The computer program or program product is executed by at least one processor to implement the steps of the method according to the first aspect or the third aspect.

In the embodiments of this application, a terminal receives first indication information from a network-side device, where the first indication information is used for indicating at least one transmission configuration indicator TCI state; and the terminal determines a target TCI state of a target signal from the at least one TCI state in a case that the terminal determines to use a TCI state indicated by the first indication information for the target signal, where the target TCI state is used for determining common beam information of the target signal. In the foregoing manner, the target TCI state used by the target signal can be determined, so that the common beam information of the target signal is determined.

### BRIEF DESCRIPTION OF THE DRAWINGS

FIG. 1 is a block diagram of a wireless communication system to which embodiments of this application are applicable;
FIG. 2 is a first flowchart of a beam information determining method according to an embodiment of this application;
FIG. 3 is a second flowchart of a beam information determining method according to an embodiment of this application;
FIG. 4 is a first structural diagram of a beam information determining apparatus according to an embodiment of this application;
FIG. 5 is a second structural diagram of a beam information determining apparatus according to an embodiment of this application;
FIG. 6 is a structural diagram of a communication device according to embodiment of this application;
FIG. 7 is a structural diagram of a terminal according to an embodiment of this application; and
FIG. 8 is a structural diagram of a network-side device according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not limit a quantity of objects. For example, there may be one or more first objects. In addition, in this specification and the claims, "and/or" represents at least one of connected objects, and the character "/" typically represents an "or" relationship between the associated objects.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the aforementioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

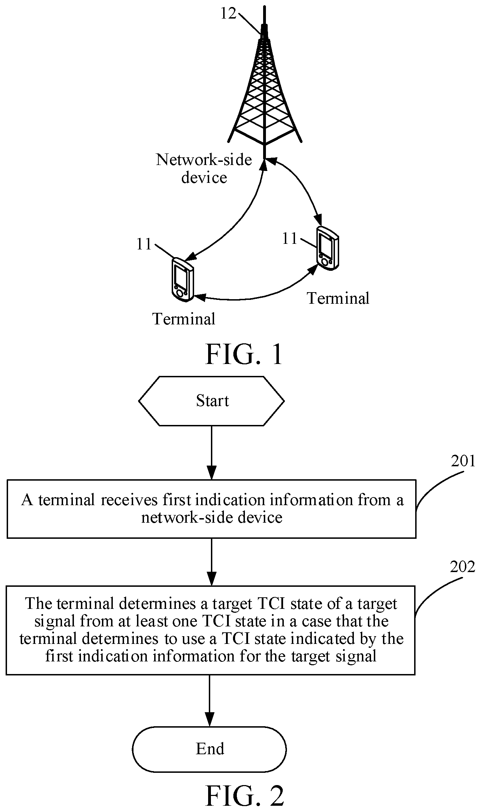

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission or reception point (Transmission or reception point, TRP), or another appropriate term in the art. Provided that the same technical effect is achieved, the base station is not limited to a specific technical term. It should be noted that the base station in the NR system is used only as an example for description in the embodiments of this application, but a specific type of the base station is not limited. The following describes in detail a beam information determining method provided in the embodiments of this application with reference to the accompanying drawings and by using some embodiments and application scenarios thereof.

As shown in FIG. 2, an embodiment of this application provides a beam information determining method, including the following steps:

Step 101: A terminal receives first indication information from a network-side device, where the first indication information is used for indicating at least one TCI state.

The target signal includes at least one of the following:
(1) a first signal, where the first signal includes a control channel related to a control resource set (Control resource set, CORESET) or a physical downlink shared channel (Physical Downlink Shared Channel, PDSCH) associated with the control channel, and the first signal includes at least one of the following:
   (11) a first control channel in a CORESET associated only with a common search space (Common Search Space, CSS), or a first control channel in a CORESET associated with a CSS other than a CSS type 3 (namely, CSS Type 3);
   (12) a PDSCH associated with the first control channel;
   (13) a second control channel in a CORESET associated with a CSS and a user equipment-specific search space (UE-specific search space, USS) other than a CORESET#0, or a second control channel in a CORESET associated with a USS and a CSS other than the CSS type 3;
   (14) a PDSCH associated with the second control channel;
   (15) a third control channel in the CORESET#0; or
   (16) a PDSCH associated with the third control channel;
(2) a second signal, where the second signal includes a semi-persistent scheduling (Semi-Persistent Scheduling, SPS) PDSCH;
(3) a third signal, where the third signal includes a configured grant (Configured Grant, CG) type 1 (namely, Type 1) physical uplink shared channel (Physical Uplink Shared Channel, PUSCH);
(4) a fourth signal, where the fourth signal includes a CG type 2 (namely, Type 2) PUSCH;
(5) a fifth signal, where the fifth signal includes a physical uplink control channel (Physical Uplink Control Channel, PUCCH) carrying periodic information, or a PUCCH carrying aperiodic information; or
(6) a sixth signal, where the sixth signal includes a channel state information reference signal (Channel State Information Reference Signal, CSI-RS) or a sounding reference signal (Sounding Reference Signal, SRS).

Step 102: The terminal determines a target TCI state of a target signal from the at least one TCI state in a case that the terminal determines to use a TCI state indicated by the first indication information for the target signal, where the target TCI state is used for determining common beam information of the target signal.

In a case that the network-side device has configured a unified TCI state, the terminal may determine, based on an indication by the network-side device or an agreement in a protocol, to use a TCI state indicated by the first indication information for the target signal. That the network-side device has configured a unified TCI state may be understood as that a unified TCI state pool is configured.

The terminal determines the target TCI state of the target signal from the at least one TCI state in a case that the terminal determines to use a TCI state indicated by the first indication information for the target signal.

In this embodiment, the terminal receives the first indication information from the network-side device, where the first indication information is used for indicating the at least one transmission configuration indicator TCI state; and the terminal determines the target TCI state of the target signal from the at least one TCI state in a case that the terminal determines to use a TCI state indicated by the first indication information for the target signal, where the target TCI state is used for determining the common beam information of the target signal. In the foregoing manner, the target TCI state used by the target signal can be determined, so that the common beam information of the target signal is determined.

In some embodiments of this application, in a case that the first indication information is used for indicating a plurality of TCI states and each TCI state corresponds to one piece of identification information, the target TCI state of the first signal includes one of the following:
(1) A TCI state, among the plurality of TCI states, that is arranged at a preset location. For example, the plurality of TCI states correspond to one code point. The preset location herein may be a preset location of each TCI state in the corresponding code point.
(2) A TCI state, among the plurality of TCI states, that corresponds to preset identification information.
(3) A TCI state that is included in the plurality of TCI states and that is used by a channel in which the first indication information is located.
(4) At least two of the plurality of TCI states, where the first signal is configured for repetition or multi-beam simultaneous transmission, for example, a single frequency network (Single Frequency Network, SFN), space division multiplexing (Space Division Multiplexing, FDM), or frequency division multiplexing (Frequency Division Multiplexing, SDM).
   The options (1), (2), (3), and (4) may be applied to an intra-cell (intra-cell) scenario.
(5) A first TCI state among the plurality of TCI states, where a quasi co-location (Quasi co-location, QCL) TypeD reference signal (for example, a CSI RS) corresponding to the first TCI state and a synchronization signal block (Synchronization Signal Block, SSB) associated with a serving cell physical cell identifier (Physical Cell Identifier, PCI) meet QCL.
(6) A TCI state, among the plurality of TCI states, that is associated with identification information associated with a serving cell PCI.

The options (5) and (6) may be applied to an inter-cell (inter-cell) scenario.

The identification information includes at least one of the following:
channel group identification information;
CORESET group identification information;
CORESET identification information;
PUCCH resource group identification information;
CORESET pool identifier;
PCI;
a TCI state identifier;
an identifier of an antenna panel of the terminal;
an identifier of a capability value of the terminal; or
an identifier of a capability value set of the terminal.

In some embodiments of this application, in a case that the first indication information is used for indicating one TCI state, the target TCI state of the first signal includes the TCI state indicated by the first indication information.

Alternatively, in a case that the first indication information is used for indicating one TCI state and the TCI state corresponds to preset identification information, the target TCI state of the first signal includes the TCI state.

Alternatively, in a case that the first indication information is used for indicating one TCI state and the first signal is configured for repetition or multi-beam simultaneous transmission, the target TCI state of the first signal includes the TCI state. Specifically, in a case that the first signal is configured for repetition or multi-beam simultaneous transmission, the terminal performs one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

Alternatively, in a case that the first indication information is used for indicating one TCI state and a QCL-TypeD reference signal corresponding to the TCI state and an SSB associated with a serving cell PCI meet QCL, the target TCI state of the first signal includes the TCI state.

Alternatively, in a case that the first indication information is used for indicating one TCI state and the TCI state is associated with identification information associated with a serving cell PCI, the target TCI state of the first signal includes the TCI state.

In some embodiments of this application, that the terminal determines a target TCI state of a target signal from the at least one TCI state in a case that the terminal determines to use a TCI state indicated by the first indication information for the target signal includes:
the terminal determines, based on second indication information or an agreement in a protocol, to use a TCI state indicated by the first indication information for the target signal, where the second indication information is used for indicating whether to use a TCI state indicated by the first indication information for the target signal, and the second indication information is sent by the network-side device; and
the terminal determines the target TCI state of the target signal from the at least one TCI state.

Specifically, the terminal may determine, based on an agreement in a protocol or an indication by the network-side device, whether the target signal is to use a TCI state indicated by the first indication information. In the foregoing embodiment, the second indication information is indication information sent by the network-side device.

In addition, it may be agreed upon, in a protocol, a type of a signal for which a TCI state indicated by the first indication information is used. When it is agreed upon that the target signal needs to use a TCI state indicated by the first indication information, the terminal may directly determine, without the second indication information, that this type of target signal is to use a TCI state indicated by the first indication information. When it is agreed upon that the target signal may use a TCI state indicated by the first indication information, the terminal then determines, based on the second indication information from the network-side device, whether this type of target signal is to use or not use a TCI state indicated by the first indication information.

The second indication information or the agreement in the protocol includes one of the following:
(1) A channel in which first radio resource control (Radio Resource Control, RRC) signaling of the target signal is located is configured to use a TCI state indicated by the first indication information. For example, a parameter that is included in configuration information of the channel in which the first RRC signaling is located and that is used for indicating whether the channel uses a TCI state indicated by the first indication information is configured to be "yes" or "enable".
(2) A CORESET in which a physical downlink control channel PDCCH associated with the second signal is located is configured to use a TCI state indicated by the first indication information.
(3) A CORESET in which a PDCCH for scheduling the second signal is located is configured to use a TCI state indicated by the first indication information.
(4) An SRS resource or an SRS resource set indicated by a sounding reference signal resource indicator (SRS resource indicator, SRI) in configuration information of the third signal is configured to use a TCI state indicated by the first indication information. For example, the SRI in the configuration information of the third signal indicates a specific SRS resource or SRS resource set, and a parameter that is included in configuration information of the SRS resource or the SRS resource set and that is used for indicating whether the SRS resource or the SRS resource set uses a TCI state indicated by the first indication information is configured to be "yes" or "enable".
(5) An SRS resource or an SRS resource set indicated by an SRI in downlink control information (Downlink Control Information, DCI) for activating the fourth signal is configured to use a TCI state indicated by the first indication information.
(6) A CORESET in which DCI for activating the fourth signal is located is configured to use a TCI state indicated by the first indication information.
(7) A CORESET in which a PDCCH associated with the fifth signal is located is configured to use a TCI state indicated by the first indication information.
(8) A CORESET in which a PDCCH for scheduling the fifth signal is located is configured to use a TCI state indicated by the first indication information.
(9) A CORESET in which a PDCCH for triggering the sixth signal is located is configured to use a TCI state indicated by the first indication information.

In some embodiments of this application, a target TCI state of the second signal includes one of the following:
(1) A TCI state, among the at least one TCI state, that is used by a CORESET in which a PDCCH associated with the second signal is located.
(2) A TCI state, among the at least one TCI state, that is used by a CORESET in which a PDCCH for scheduling the second signal is located.
(3) A TCI state, among the at least one TCI state, that is indicated by first information and that is used for the second signal, where the first information is carried in a PDCCH associated with the second signal, or the first information is carried in a PDCCH for scheduling the second signal, or the first information is carried in configuration information of the second signal. For example, a network schedules transmission of an SPS PDSCH by using DCI. In a case that the network has indicated a plurality of TCI states by using the first indication information, a signaling field (namely, the first information) may be used in the DCI for indicating specific TCI states, among the plurality of TCI states, that are used for the SPS PDSCH.
(4) A preset TCI state among the at least one TCI state and among a plurality of TCI states of a first PDCCH, where the first PDCCH is a PDCCH associated with the second signal or a PDCCH for scheduling the second signal, and the first PDCCH is configured for repetition or multi-beam simultaneous transmission.
(5) A second TCI state among the at least one TCI state, where a QCL-TypeD reference signal corresponding to the second TCI state and an SSB associated with a serving cell PCI meet QCL.
(6) A TCI state, among the at least one TCI state, that is associated with identification information associated with a serving cell PCI.

In some embodiments of this application, in a case that the first indication information is used for indicating a plurality of TCI states and each TCI state corresponds to one piece of identification information, a target TCI state of the third signal includes one of the following:
(1) A TCI state, among the plurality of TCI states, that is used by a channel in which RRC configuration signaling of the third signal is located.
(2) A TCI state, among the plurality of TCI states, that is arranged at a preset location.
(3) A TCI state, among the plurality of TCI states, that corresponds to preset identification information.
(4) A TCI state, among the plurality of TCI states, that is associated with identification information associated with the third signal.
(5) A TCI state, among the plurality of TCI states, that is indicated by second information in configuration information of the third signal and that is used for the third signal. For example, the network has configured transmission of a CG type 1 PUSCH by using RRC signaling. In a case that the network has indicated a plurality of TCI states by using the first indication information, a signaling field (namely, the second information) may be used in the RRC signaling for indicating specific TCI states, among the plurality of TCI states, that are used for the CG type 1 PUSCH.
(6) A TCI state, among the plurality of TCI states, that is used by an SRS resource or an SRS resource set indicated by an SRI in configuration information of the third signal.

The third signal is configured for single-beam transmission.

When the third signal is configured for single-beam transmission, determining may be performed based on at least one of the following: The number of times of repetition configured by RRC is 1, one set of power control parameters is configured by RRC (each set of power control parameters includes at least one of a PLRS, P0, alpha, or a close loop index), RRC includes one SRI field (field), the third signal corresponds to one TCI state, or the third signal corresponds to one piece of identification information.

In some embodiments of this application, in a case that the first indication information is used for indicating a plurality of TCI states and each TCI state corresponds to one piece of identification information, a target TCI state of the third signal includes one of the following:
(1) at least two of the plurality of TCI states;
(2) a TCI state that is indicated by second information in configuration information of the third signal and that is used for the third signal, where the number of TCI states indicated by the second information is greater than 1; or
(3) a TCI state used by SRS resources or SRS resource sets indicated by a plurality of SRIs in configuration information of the third signal.

The third signal is configured for multi-beam transmission.

When the third signal is configured for multi-beam transmission, determining may be performed based on at least one of the following: The number of times of repetition configured by RRC is greater than 1, more than one set of power control parameters is configured by RRC, RRC includes more than one SRI field, the third signal corresponds to more than one TCI state, or the third signal corresponds to more than one piece of identification information.

In some embodiments of this application, in a case that the first indication information is used for indicating one TCI state, a target TCI state of the third signal includes the TCI state; or
in a case that the first indication information is used for indicating one TCI state and the TCI state corresponds to the same identification information as the third signal or the TCI state is associated with the third signal, a target TCI state of the third signal includes the TCI state; or
in a case that the first indication information is used for indicating one TCI state and a TCI state indicated by second information is the TCI state, a target TCI state of the third signal includes the TCI state, where the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal includes the TCI state; or
in a case that the first indication information is used for indicating one TCI state and the third signal is configured for repetition or multi-beam simultaneous transmission, a target TCI state of the third signal includes the TCI state. In a case that the third signal is configured for repetition or multi-beam simultaneous transmission, the terminal performs one of the following operations:
   in a case that the third signal is configured for repetition, performing repetition by using the TCI state; or
   updating, to the TCI state, a preset TCI state among TCI states used by current repetition or multi-beam simultaneous transmission.

In some embodiments of this application, in a case that the first indication information is used for indicating a plurality of TCI states and each TCI state corresponds to one piece of identification information, a target TCI state of the fourth signal includes one of the following:
(1) A TCI state, among the plurality of TCI states, that is used by a channel in which RRC configuration signaling of the fourth signal is located.
(2) A TCI state, among the plurality of TCI states, that is arranged at a preset location.
(3) A TCI state, among the plurality of TCI states, that corresponds to preset identification information.
(4) A TCI state, among the plurality of TCI states, that is associated with identification information associated with the fourth signal.
(5) A TCI state, among the plurality of TCI states, that is indicated by third information and that is used for the fourth signal, where the third information is carried in DCI for activating the fourth signal. For example, the network has activated transmission of a CG type 2 PUSCH by using RRC signaling. In a case that the network has indicated a plurality of TCI states by using the first indication information, a signaling field (namely, the third information) may be used in the RRC signaling for indicating specific TCI states, among the plurality of TCI states, that are used for the CG type 2 PUSCH.
(6) A TCI state, among the plurality of TCI states, that is used by an SRS resource or an SRS resource set indicated by an SRI in DCI for activating the fourth signal.
(7) A TCI state, among the plurality of TCI states, that is used by a PDCCH in which DCI for activating the fourth signal is located.
(8) A preset TCI state among the plurality of TCI states and among TCI states used by a PDCCH in which DCI for activating the fourth signal is located.

The fourth signal is configured for single-beam transmission.

In some embodiments of this application, in a case that the first indication information is used for indicating a plurality of TCI states and each TCI state corresponds to one piece of identification information, a target TCI state of the fourth signal includes one of the following:
(1) at least two of the plurality of TCI states;
(2) a TCI state, among the plurality of TCI states, that is indicated by third information and that is used for the fourth signal, where the third information is carried in DCI for activating the fourth signal, and the number of TCI states indicated by the third information is greater than 1;
(3) a TCI state, among the plurality of TCI states, that is used by SRS resources or SRS resource sets indicated by a plurality of SRIs in DCI for activating the fourth signal; or
(4) a TCI state, among the plurality of TCI states, that is used by a PDCCH in which DCI for activating the fourth signal is located.

The fourth signal is configured for multi-beam transmission.

In some embodiments of this application, in a case that the first indication information is used for indicating one TCI state, a target TCI state of the fourth signal includes the TCI state; or
in a case that the first indication information is used for indicating one TCI state and the TCI state corresponds to the same identification information as the fourth signal or the TCI state is associated with the fourth signal, a target TCI state of the fourth signal includes the TCI state; or
in a case that the first indication information is used for indicating one TCI state and a TCI state indicated by third information is the TCI state, a target TCI state of the fourth signal includes the TCI state, where the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal includes the TCI state; or
in a case that the first indication information is used for indicating one TCI state, a target TCI state of the fourth signal includes a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal includes the TCI state. Specifically, in a case that the fourth signal is configured for repetition or multi-beam simultaneous transmission, the terminal performs one of the following operations:
   in a case that the fourth signal is configured for repetition, performing repetition by using the TCI state; or
   updating, to the TCI state, a preset TCI state among TCI states used by current repetition or multi-beam simultaneous transmission.

In some embodiments of this application, in a case that the first indication information is used for indicating a plurality of TCI states and each TCI state corresponds to one piece of identification information, a target TCI state of the fifth signal includes one of the following:
(1) At least two of the plurality of TCI states.
(2) A TCI state, among the plurality of TCI states, that is arranged at a preset location.
(3) A TCI state, among the plurality of TCI states, that corresponds to preset identification information.
(4) A TCI state, among the plurality of TCI states, that is associated with identification information associated with the fifth signal.
(5) A TCI state, among the plurality of TCI states, that is indicated by fourth information and that is used for the fifth signal, where the fourth information is carried in configuration information of the fifth signal. For example, the network has configured a PUCCH resource by using RRC signaling. In a case that the network has indicated a plurality of TCI states by using the first indication information, a signaling field (namely, the fourth information) may be used in the RRC signaling for indicating specific TCI states, among the plurality of TCI states, that are used for the PUCCH resource.
(6) A TCI state, among the plurality of TCI states, that is indicated by fifth information and that is used for the fifth signal, where the fifth information is carried in DCI indicating the fifth signal, and the fifth signal is a PUCCH carrying aperiodic information. For example, the network has configured, by using RRC signaling, a PUCCH resource for transmitting aperiodic information, and the network has indicated transmission of the PUCCH by using DCI. In a case that the network indicates a plurality of TCI states by using the first indication information, a signaling field (namely, the fifth information) may be used in the DCI for indicating specific TCI states, among the plurality of TCI states, that are used for the PUCCH resource.
(7) A TCI state, among the plurality of TCI states, that is indicated by sixth information and that is used for the fifth signal, where the sixth information is used for activating or indicating a TCI state. For example, the network has activated a plurality of TCI states by using a MAC CE command before indicating a TCI state by using the first indication information. The activation command may include the sixth information, and the sixth information indicates a type of a signal for which each code point is used, or a type of a signal for which each TCI state corresponding to a code point is used. In a case that the network has configured or indicated transmission of a PUCCH, specific TCI states, among the plurality of TCI states, that are used for the PUCCH may be determined based on the TCI states indicated by the first indication information or the sixth information of code points corresponding to the TCI states in the activation command.
(8) A TCI state, among the plurality of TCI states, that is used by a second PDCCH, where the second PDCCH is a PDCCH indicating the PUCCH carrying aperiodic information.

In some embodiments of this application, in a case that the first indication information is used for indicating one TCI state, a target TCI state of the fifth signal includes the TCI state; or
in a case that the first indication information is used for indicating one TCI state and the TCI state corresponds to the same identification information as the fifth signal or the TCI state is associated with the fifth signal, a target TCI state of the fifth signal includes the TCI state; or
in a case that the first indication information is used for indicating one TCI state and a TCI state indicated by fourth information is the TCI state, a target TCI state of the fifth signal includes the TCI state, where the fourth information is carried in configuration information of the fifth signal; or
in a case that the first indication information is used is for indicating one TCI state and a TCI state indicated by fifth information is the TCI state, a target TCI state of the fifth signal includes the TCI state, where the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal includes the TCI state, where the sixth information is used for activating or indicating a TCI state; or
in a case that the first indication information is used for indicating one TCI state, a TCI state used by a second PDCCH, where the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal includes the TCI state. Specifically, in a case that the fifth signal is configured for repetition or multi-beam simultaneous transmission, the terminal performs one of the following operations:
   in a case that the fifth signal is configured for repetition, performing repetition by using the TCI state; or
   updating, to the TCI state, a preset TCI state among TCI states used by current repetition or multi-beam simultaneous transmission.

In some embodiments of this application, M resource sets are configured, activated, or triggered on the network-side device, each of N resource sets among the M resource sets includes at least one resource group, each resource group includes at least one sixth signal resource, and each of the M resource sets other than the N resource sets includes at least one sixth signal resource, where M is a positive integer greater than 1, and N is an integer greater than or equal to 0 and less than or equal to M. To be specific, a resource set may directly include at least one sixth signal resource; or a resource set may include a resource group, and the resource group includes at least one sixth signal resource. In a case that the first indication information is used for indicating a plurality of TCI states and each TCI state corresponds to one piece of identification information, a TCI state used by the sixth signal meets one of the following:
(1) The sixth signal in a target resource set uses a TCI state associated with the same identification information as the target resource set, where the target resource set is any one of the M resource sets. For example, a CSI-RS resource set is associated with identification information, and all CSI-RS resources in the CSI-RS resource set use a TCI state associated with the same identification information as the CSI-RS resource set.
(2) The sixth signal in a target resource group uses a TCI state associated with the same identification information as the target resource group, where the target resource group is any one of resource groups included in the N resource sets. For example, a CSI-RS resource set includes at least one CSI-RS resource group (which may be a CMR group, to be specific, a CSI-RS resource group used for channel measurement (channel measurement)), the CSI-RS resource group is associated with identification information, and all CSI-RS resources in each CSI-RS resource group use a TCI state associated with the same identification information as the CSI-RS resource group.
(3) The sixth signal uses a TCI state associated with the same identification information as the sixth signal resource. For example, a CSI-RS resource is associated with identification information, and the CSI-RS resource uses a TCI state associated with the same identification information as the CSI-RS resource.
(4) The sixth signal in the target resource set uses a TCI state associated with the target resource set. For example, a CSI-RS resource set is associated with a TCI state, and all CSI-RS resources in the CSI-RS resource set use the TCI state associated with the CSI-RS resource set.
(5) The sixth signal in the target resource group uses a TCI state associated with the target resource group. For example, a CSI-RS resource set includes at least one CSI-RS resource group, the CSI-RS resource group is associated with a TCI state, and all CSI-RS resources in each CSI-RS resource group use the TCI state associated with the CSI-RS resource group.
(6) The sixth signal uses a TCI state associated with the sixth signal resource. For example, a CSI-RS resource is associated with a TCI state, and the CSI-RS resource uses the TCI state associated with the CSI-RS resource.
(7) The sixth signal uses a TCI state used by a PDCCH for triggering the sixth signal, where the sixth signal is an aperiodic signal. For example, the network has triggered an aperiodic CSI-RS resource set by using a PDCCH, and all CSI-RS resources in the CSI-RS resource set use a TCI state used by the PDCCH.
(8) The sixth signal uses a TCI state that is indicated by seventh information and that is used for the sixth signal, where the seventh information is carried in configuration information of the sixth signal. For example, the network has configured a CSI-RS by using RRC signaling, and seventh information in the RRC signaling is used for indicating specific TCI states, among the TCI states indicated by the first indication information, that are used for the CSI-RS.
(9) The sixth signal uses a TCI state that is indicated by eighth information and that is used for the sixth signal, where the eighth information is carried in a Media Access Control control element (Media Access Control Control Element, MAC CE) for activating the sixth signal. For example, the network has activated a semi-persistent CSI-RS by using a MAC CE command, and eighth information in the MAC CE command is used for indicating specific TCI states, among the TCI states indicated by the first indication information, that are used for the semi-persistent CSI-RS.
(10) The sixth signal uses a TCI state that is indicated by ninth information and that is used for the sixth signal, where the ninth information is carried in DCI for triggering the sixth signal.
(11) The sixth signal uses a TCI state that is indicated by tenth information and that is used for the sixth signal, where the tenth information is used for activating or indicating a TCI state.

In some embodiments of this application, M resource sets are configured, activated, or triggered on the network-side device, each of N resource sets among the M resource sets includes at least one resource group, each resource group includes at least one sixth signal resource, and each of the M resource sets other than the N resource sets includes at least one sixth signal resource, where M is an integer greater than or equal to 1, and N is an integer greater than or equal to 0 and less than or equal to M. In a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, where the target resource set is any one of the M resource sets;
in a case that the TCI state is associated with the same identification information as a target resource group, the sixth signal in the target resource group uses the TCI state, where the target resource group is any one of resource groups included in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, where the seventh information is carried in configuration information of the sixth signal;
in a case that a TCI state that is indicated by eighth information and that is used for the sixth signal is the TCI state, the sixth signal uses the TCI state, where the eighth information is carried in MAC CE signaling for activating the sixth signal;
in a case that a TCI state that is indicated by ninth information and that is used for the sixth signal is the TCI state, the sixth signal uses the TCI state, where the ninth information is carried in DCI for triggering the sixth signal;
in a case that a TCI state that is indicated by tenth information and that is used for the sixth signal is the TCI state, the sixth signal uses the TCI state, where the tenth information is used for activating or indicating a TCI state; or
the sixth signal uses a TCI state used by a PDCCH for triggering the sixth signal, where the sixth signal is an aperiodic signal.

In some embodiments of this application, one resource set is configured, activated, or triggered on the network-side device. The resource set includes at least one resource group, and each resource group includes at least one sixth signal resource. Alternatively, the resource set does not include a resource group, and the resource set includes at least one sixth signal resource. In a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, where the target resource group is any one of resource groups included in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

In some embodiments of this application, the first indication information is carried in target DCI, and the first indication information indicates a plurality of TCI states by indicating a first code point, or the first indication information indicates one TCI state by indicating a second code point, where a MAC CE for activating a TCI state includes the first code point and the second code point, and a TCI state corresponding to the first code point is one of the following:
a plurality of joint TCI states;
a plurality of pairs of TCI states, where each pair of TCI states includes a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
   a joint TCI state;
   a DL TCI state and a UL TCI state;
   a separate DL TCI state; or
   a separate UL TCI state.

Specifically, after configuring the unified TCI state, the network-side device activates or indicates a TCI state in the following possible manner: When the network-side device activates a TCI state by using a MAC CE, at least one code point corresponds to a plurality of joint (joint) TCI states or a plurality of pairs of separate (separate) TCI states, for example, a plurality of pairs of separate DL TCI states and separate UL TCI states, a plurality of separate DL TCI states, or a plurality of separate UL TCI states. The first indication information may be DCI. When a TCI field (field) in the DCI indicates the first code point, the network-side device has indicated a plurality of TCI states. When the TCI field in the DCI indicates the second code point, the network-side device has indicated one TCI state.

A target code point includes the first code point or the second code point. A TCI state corresponding to the target code point has an association relationship with identification information. The association relationship is determined based on at least one of following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

In some embodiments of this application, when a TCI state is activated by using a MAC CE, all code points each correspond to only one joint TCI state or one pair of separate TCI states, for example, one pair of separate DL TCI state and separate UL TCI state, one separate DL TCI state, or one separate UL TCI state. To be specific, a MAC CE for activating a TCI state includes a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI includes one or more pieces of DCI, and the first indication information indicates a TCI state in at least one of the following manners:
   (1) in a case that the DCI includes one indicator field and the indicator field indicates the third code point, the first indication information indicates one TCI state by using one piece of DCI;
   (2) in a case that the DCI includes a plurality of indicator fields and each indicator field indicates one third code point, the first indication information indicates a plurality of TCI states by using one piece of DCI;
   (3) in a case that the DCI includes a plurality of indicator fields and only one of the plurality of indicator fields is effective, the first indication information indicates one TCI state by using one piece of DCI; or
   (4) in a case that the DCI includes a plurality of indicator fields and the plurality of indicator fields indicate a same third code point, the first indication information indicates one TCI state by using one piece of DCI.

In some embodiments of this application, in a case that the first indication information is used for indicating a plurality of TCI states and each TCI state corresponds to one piece of identification information, the target TCI state of the target signal includes: a TCI state, among the plurality of TCI states, that is indicated by third indication information and that is used for the target signal, where the third indication information is used for activating or indicating a TCI state.

In some embodiments of this application, in a case that the first indication information is used for indicating one TCI state and third indication information indicates that the TCI state is used for the target signal, the target TCI state of the target signal includes the TCI state, where the third indication information is used for activating or indicating a TCI state.

For example, the network has activated a plurality of TCI states by using a MAC CE command before indicating a TCI state by using the first indication information. The activation command may include third indication information, and the third indication information indicates a type of a signal for which each code point is used, or a type of a signal for which each TCI state corresponding to a code point is used. In a case that the network has configured or indicated transmission of a specific target signal, specific TCI states, among the plurality of TCI states, that are used for the target signal may be determined based on the TCI states indicated by the first indication information or the third indication information of code points corresponding to the TCI states in the activation command. For example, among code points corresponding to the TCI states activated by using the MAC CE, the third indication information indicates that a first code point is used for an SPS PDSCH, a second code point is used for a PUCCH, a third code point is used for a CSI-RS and an SRS, and so on. For another example, among code points corresponding to the TCI states activated by using the MAC CE, a first code point corresponds to two TCI states, and the third indication information indicates that the former TCI state is used for a CORESET associated with a USS and a PDSCH associated with the CORESET, the latter TCI state is used for a CG PUSCH, and so on.

The beam information determining method provided in this application is described below by using an example.
(1) When a network has configured a unified TCI state, UE determines, based on an indication by the network or an agreement in a protocol, whether a target signal is to use a TCI state indicated by the network.
   i. That the unified TCI state is configured may be understood as that a unified TCI state pool is configured.
   ii. The target signal includes:
      1. a signal 1: a control channel in a CORESET associated only with a CSS (for brevity, referred to as a CORESET B below), or a control channel in a CORESET associated only with a CSS other than a CSS type 3, and a PDSCH associated with the control channel;
      2. a signal 2: a control channel in a CORESET associated with a CSS and a USS (for brevity, referred to as a CORESET C below) other than a CORESET#0, or a control channel in a CORESET associated with a CSS and a USS other than the CSS type 3, and a PDSCH associated with the control channel;
      3. a signal 3: a control channel in the CORESET#0, and a PDSCH associated with the control channel.
      4. a signal 4: an SPS PDSCH;
      5. a signal 5: a CG type 1 PUSCH;
      6. a signal 6: a CG type 2 PUSCH;
      7. a signal 7: a PUCCH carrying periodic information;
      8. a signal 8: a PUCCH carrying aperiodic information;
      9. a signal 9: a CSI-RS; or
      10. a signal 10: an SRS.
(2) If a determining result is yes ("yes" indicates that the target signal is to use a TCI state indicated by the network), a target TCI state of the target signal needs to be determined from TCI states at least based on (a case of being based on other information is not excluded) at least one of the following information (a plurality of pieces of information may be jointly used as a basis):
   (a) information about TCI states, for example, the number, or an arrangement order or locations of a plurality of TCI states;
   (b) identification information, for example, a channel group identifier, a CORESET group identifier, a CORESET identifier, a PUCCH resource group identifier, a CORESETPoolIndex, a PCI, a TCI state identifier, a UE antenna panel (panel) identifier, a UE capability value, or a UE capacity value set.
(3) For the signals 1, 2, and 3, if a determining result is "yes":
   (a) In an intra-cell scenario:
      i. If the network has indicated a plurality of TCI states and the TCI states correspond to a plurality of pieces identification information respectively, the target TCI state is as follows:
         1. a TCI state arranged at a preset location;
         2. a TCI state corresponding to preset identification information;
         3. a TCI state of a channel in which signaling indicating a TCI state is located; or
         4. if a control channel in the signal is configured for repetition (repetition) or multi-beam simultaneous transmission (for example, SFN, FDM, or SDM), the plurality of TCI states are used as the target TCI state.
      ii. If the network has indicated one TCI state, the target TCI state is as follows:
         1. the TCI state;
         2. when the TCI state corresponds to preset identification information, the TCI state is used as the target TCI state; or
         3. if a control channel in the signal is configured for repetition (repetition) or multi-beam simultaneous transmission (for example, SFN, FDM, or SDM), these transmission modes are stopped, or the TCI state is used for repetition, or a preset TCI state among TCI states used by current transmission is updated to the TCI state (the preset TCI state has a correspondence with or corresponds to the same identification information as the TCI state).
   (b) In an inter-cell scenario:
      i. If the network has indicated a plurality of TCI states and the TCI states correspond to a plurality of pieces identification information respectively, the target TCI state is as follows:
         1. a TCI state, among the plurality of TCI states, that corresponds to a QCL-TypeD RS (CSI-RS) meeting QCL with an SSB associated with a serving cell PCI; or
         2. a TCI state, among the plurality of TCI states, that is associated with identification information associated with a serving cell PCI.
      ii. If the network has indicated one TCI state, the target TCI state is as follows:
         1. in a case that a QCL-TypeD RS (CSI-RS) corresponding to the TCI state and an SSB associated with a serving cell PCI meet QCL, the TCI state is used as the target TCI state; or
         2. in a case that the TCI state is associated with identification information associated with a serving cell PCI, the TCI state is used as the target TCI state.
(4) For the signal 4:
   (a) A condition under which a determining result is "yes" is as follows:
      i. a CORESET in which a PDCCH associated with the signal 4 or used for scheduling the signal 4 is located is configured as "yes"; or
      ii. "yes" is configured by the network or agreed upon in a protocol.
   (b) A target TCI state of the signal 4 is as follows:
      i. a TCI state of the CORESET in which the PDCCH associated with the signal 4 or used for scheduling the signal 4 is located;
      ii. a TCI state indicated by a first command, where the first command may be located in the PDCCH associated with the signal 4 or used for scheduling the signal 4, or located in configuration information of the signal 4;
      iii. when the PDCCH is configured for multi-beam transmission (repetition or multi-beam simultaneous transmission), a preset TCI state among a plurality of TCI states of the PDCCH is used; or
      iv. in an inter-cell scenario, a TCI state that corresponds to a QCL-TypeD RS (CSI-RS) meeting QCL with an SSB associated with a serving cell PCI is used, or a TCI state that is associated with identification information associated with a serving cell PCI is used.
(5) For the signal 5:
   (a) A condition under which a determining result is "yes" is as follows:
      i. being always "yes" is configured;
      ii. being always "no" is configured;
      iii. "yes" is configured by RRC signaling from the network; or
      iv. an SRS resource or an SRS resource set indicated by an SRI in configuration information of the signal 5 is configured as "yes" by the network.
   (b) If the network has indicated a plurality of TCI states and the TCI states correspond to a plurality of pieces identification information respectively, the target TCI state is as follows:
      i. when the signal 5 is configured for single-beam transmission, for example, when the number of times of repetition configured by RRC is 1, one set of power control parameters is configured by RRC, one SRI field is configured by RRC, the signal 5 corresponds to one TCI state, or the signal 5 corresponds to one piece of identification information:
         1. a TCI state of a channel in which RRC configuration signaling of the signal 5 is located;
         2. a TCI state arranged at a preset location;
         3. a TCI state corresponding to preset identification information;
         4. a TCI state associated with identification information associated with the signal 5;
         5. a TCI state indicated by a second command in configuration information of the signal 5; or
         6. a TCI state used by an SRS resource or an SRS resource set indicated by an SRI in configuration information of the signal 5.
      ii. when the signal 5 is configured for multi-beam transmission, for example, when the number of times of repetition configured by RRC is greater than 1, more than one set of power control parameters is configured by RRC, more than one SRI field is configured by RRC, the signal 5 corresponds to more than one TCI state, and the signal 5 corresponds to more than one piece of identification information:
         1. a plurality of TCI states indicated by the network;
         2. more than one TCI state indicated by a second command in configuration information of the signal 5; or
         3. a TCI state used by SRS resources or SRS resource sets indicated by a plurality of SRIs in configuration information of the signal 5.
   (c) If the network has indicated one TCI state, the target TCI state is as follows:
      i. the TCI state;
      ii. when the TCI state corresponds to the same identification information as the signal 5 or the TCI state is associated with the signal 5, the TCI state is used;
      iii. when a TCI state indicated by a second command in configuration information of the signal 5 is the TCI state, the TCI state is used;
      iv. when a TCI state used by an SRS resource or an SRS resource set indicated by an SRI in configuration information of the signal 5 is the TCI state, the TCI state is used;
      v. when the signal 5 is configured for repetition, the TCI state is used for repetition, or a preset TCI state among TCI states used by current transmission is updated to the TCI state (the preset TCI state has a correspondence with or corresponds to the same identification information as the TCI state).
(6) For the signal 6:
   (a) A condition under which a determining result is "yes" is as follows:
      i. being always "yes" is configured;
      ii. being always "no" is configured;
      iii. "yes" is configured by RRC signaling from the network;
      iv. an SRS resource or an SRS resource set indicated by an SRI in DCI for activating the signal 6 is configured as "yes" by the network; or
      v. a CORESET in which DCI for activating the signal 6 is located is configured as "yes" by the network.
   (b) If the network has indicated a plurality of TCI states and the TCI states correspond to a plurality of pieces identification information respectively, the target TCI state is as follows:
      i. when the signal 6 is configured for single-beam transmission, where example conditions are the same as those for the signal 5:
         1. a TCI state of a channel in which RRC configuration signaling of the signal 6 is located;
         2. a TCI state arranged at a preset location;
         3. a TCI state corresponding to preset identification information;
         4. a TCI state associated with identification information associated with the signal 6;
         5. a TCI state indicated by a third command in DCI for activating the signal 6;
         6. a TCI state used by an SRS resource or an SRS resource set indicated by an SRI in DCI for activating the signal 6; or
         7. a TCI state of a PDCCH in which DCI for activating the signal 6 is located, or a preset TCI state of the PDCCH (when the PDCCH uses a plurality of TCI states for transmission).
      ii. when the signal 6 is configured for multi-beam transmission, where example conditions are the same as those for the signal 5:
         1. a plurality of TCI states indicated by the network;
         2. more than one TCI state indicated by a third command in DCI for activating the signal 6;
         3. a TCI state used by SRS resources or SRS resource sets indicated by a plurality of SRIs in DCI for activating the signal 6; or
         4. a TCI state of a PDCCH in which DCI for activating the signal 6 is located.
   (c) If the network has indicated one TCI state, the target TCI state is as follows:
      i. the TCI state;
      ii. when the TCI state corresponds to the same identification information as the signal 6 or the TCI state is associated with the signal 6, the TCI state is used;
      iii. when a TCI state indicated by a third command in DCI for activating the signal 6 is the TCI state, the TCI state is used;
      iv. when a TCI state used by an SRS resource or an SRS resource set indicated by an SRI in DCI for activating the signal 6 is the TCI state, the TCI state is used;
      v. a TCI state of a PDCCH in which DCI for activating the signal 6 is located; or
      vi. when the signal 6 is configured for repetition or multi-beam simultaneous transmission, the TCI state is used for repetition, or a preset TCI state among TCI states used by current transmission is updated to the TCI state (the preset TCI state has a correspondence with or corresponds to the same identification information as the TCI state).
(7) For the signals 7 and 8:
   (a) A condition under which a determining result is "yes" is as follows:
      i. being always "yes" is configured;
      ii. being always "no" is configured;
      iii. "yes" is configured by RRC signaling from the network; or
      iv. in a case that a CORESET in which a PDCCH for scheduling the signal 8 is located is configured as "yes" by the network, the signal 8 is also configured as "yes".
   (b) If the network has indicated a plurality of TCI states and the TCI states correspond to a plurality of pieces identification information respectively, the target TCI state is as follows:
      i. a plurality of TCI states indicated by the network;
      ii. a TCI state arranged at a preset location;
      iii. a TCI state corresponding to preset identification information;
      iv. a TCI state associated with identification information associated with the signal 7 or 8;
      v. a TCI state, among the plurality of TCI states, that is indicated by a fourth command in configuration information of the signal 7 or 8 (for example, a fourth command in RRC is used for indicating a specific TCI state used for the signal 7 or 8, or specific identification information associated with a TCI state used for the signal 7 or 8, or identification information associated with the signal 7 or 8);
      vi. a TCI state, among the plurality of TCI states, that is indicated by a fifth command in DCI indicating the signal 8;
      vii. a TCI state that is used for the signal 7 or 8 and that is indicated by a sixth command for activating or indicating the TCI states (for example, when a plurality of TCI states are activated by using a MAC CE, the MAC CE further indicates whether each TCI state is used for the signal 7 or 8, and indicates a specific signal 7 or 8 for which each TCI state is used, or specific identification information associated with a signal for which each TCI state is used); or
      viii. a TCI state of a PDCCH in which DCI indicating the signal 8 is located.
   (c) If the network has indicated one TCI state, the target TCI state is as follows:
      i. the TCI state;
      ii. when the TCI state corresponds to the same identification information as the signal 7 or 8 or the TCI state is associated with the signal 7 or 8, the TCI state is used;
      iii. when a TCI state indicated by a fourth command in configuration information of the signal 7 or 8 is the TCI state, the TCI state is used;
      iv. when a TCI state indicated by a fifth command in DCI indicating the signal 8 is the TCI state, the TCI state is used;
      v. when a TCI state that is used for the signal 7 or 8 and that is indicated by a sixth command for activating or indicating the TCI state is the TCI state, the TCI state is used;
      vi. a TCI state of a PDCCH in which DCI indicating the signal 8 is located; or
      vii. when the signal 7 or 8 is configured for repetition or multi-beam simultaneous transmission, the TCI state is used for repetition, or a preset TCI state among TCI states used by current transmission is updated to the TCI state (the preset TCI state has a correspondence with or corresponds to the same identification information as the TCI state).
(8) For the signals 9 and 10, if a determining result is "yes":
   (a) When the network has configured (periodically), activated (semi-persistently), or triggered (aperiodically) M RS resource sets, optionally, N RS resource sets among the M RS resource sets each are configured to include a plurality of RS resource groups. At least one RS resource is configured in each RS resource set or RS resource group. M is an integer greater than 1, and N is an integer greater than or equal to 0.
      i. If the network has indicated a plurality of TCI states and the TCI states correspond to a plurality of pieces identification information respectively, the target TCI state is as follows:
         1. each resource set, resource group, or resource uses a TCI state associated with the same identification information as the resource set, the resource group, or the resource;
         2. each resource set, resource group, or resource uses a TCI state associated with the resource set, the resource group, or the resource;
         3. for an aperiodic RS, a TCI state of a PDCCH for triggering the RS is used;
         4. a TCI state, among the plurality of TCI states, that is indicated by a seventh command in configuration information of the signal 9 or 10 (for example, a seventh command in RRC is used for indicating a specific TCI state used for the signal 9, or specific identification information associated with a TCI state used for the signal 9, or identification information associated with the signal 9);
         5. a TCI state, among the plurality of TCI states, that is indicated by an eighth command in a MAC CE for activating the signal 9 or 10;
         6. a TCI state, among the plurality of TCI states, that is indicated by a ninth command in DCI for triggering the signal 9 or 10; or
         7. a TCI state that is used for the signal 9 or 10 and that is indicated by a tenth command for activating or indicating the TCI states (for example, when a plurality of TCI states are activated by using a MAC CE, the MAC CE further indicates whether each TCI state is used for the signal 9 or 10, and indicates a specific signal for which each TCI state is used, or specific identification information associated with a signal for which each TCI state is used).
      ii. If the network has indicated one TCI state, the target TCI state is as follows:
         1. the TCI state;
         2. when the TCI state corresponds to the same identification information as a resource set, a resource group, or a resource, or the TCI state is associated with a resource set, a resource group, or a resource, the TCI state is used;
         3. when a TCI state indicated by a seventh command in configuration information of the signal 9 or 10 is the TCI state, the TCI state is used;
         4. when a TCI state indicated by an eighth command in a MAC CE for activating the signal 9 or 10 is the TCI state, the TCI state is used;
         5. when a TCI state indicated by a ninth command in DCI for triggering the signal 9 or 10 is the TCI state, the TCI state is used;
         6. when a TCI state that is used for the signal 9 or 10 and that is indicated by a tenth command for activating or indicating the TCI state is the TCI state, the TCI state is used; or
         7. for an aperiodic RS, a TCI state of a PDCCH for triggering the RS is used.
   (b) When the network has configured (periodically), activated (semi-persistently), or triggered (aperiodically) one RS resource set, optionally, the RS resource set may not include a resource group, or may include at least one resource group.
      i. If the network has indicated a plurality of TCI states and the TCI states correspond to a plurality of pieces identification information respectively, the target TCI state is as follows:
         1. a TCI state arranged at a preset location;
         2. a TCI state corresponding to preset identification information;
         3. a resource set, a resource group, or a resource uses a TCI state associated with the same identification information as the resource set, the resource group, or the resource;
         4. a resource set, a resource group, or a resource uses a TCI state associated with the resource set, the resource group, or the resource;
         5. for an aperiodic RS, a TCI state of a PDCCH for triggering the RS is used; or
         6. a TCI state, among the plurality of TCI states, that is indicated by the seventh, eighth, ninth, or tenth command.
      ii. If the network has indicated one TCI state, the target TCI state is as follows:
         1. a case is the same as the case in (8) in which M > 1.
(9) After configuring the unified TCI state, the network activates or indicates a TCI state in the following possible manners:
   (a) When a TCI state is activated by using a MAC CE, at least one code point corresponds to a plurality of joint TCI states or a plurality of pairs of separate TCI states (for example, a plurality of pairs of separate DL TCI states and separate UL TCI states, a plurality of separate DL TCI states, or a plurality of separate UL TCI states):
      i. when a TCI field in DCI indicates the foregoing code point, the network indicates a plurality of TCI states; or
      ii. when a TCI field in DCI indicates a code point other than the foregoing code point, the network indicates one TCI state; and
      iii. further, TCI states corresponding to the indicated code point may be associated with identification information:
         1. association is established based on an arrangement order or locations of TCI states corresponding to the code point;
         2. association is established for TCI states in a TCI state pool configured by RRC;
         3. association between TCI states in a TCI state pool and identification information is determined based on association between the pool and identification information;
         4. association is indicated in a MAC CE; or
         5. association is indicated in DCI.
   (b) When a TCI state is activated by using a MAC CE, all code points each correspond to only one joint TCI state or one pair of separate TCI states (for example, one pair of separate DL TCI state and separate UL TCI state, one separate DL TCI state, or one separate UL TCI state):
      i. when DCI includes one TCI field, each piece DCI can indicate only one TCI state, and a plurality of pieces of DCI may indicate a plurality of TCI states;
      ii. when DCI includes a plurality of TCI fields, each TCI field may indicate one code point, and in this case, the plurality of TCI fields in the DCI may indicate a plurality of TCI states; or
      iii. when DCI includes a plurality of TCI fields, if only one TCI field is effective, or if the plurality of TCI fields indicate a same code point, the plurality of TCI fields in the DCI may indicate one TCI state; and
      iv. further, TCI states corresponding to the indicated code point may be associated with identification information, for example:
         1. association is established based on an arrangement order or a location corresponding to the code point;
         2. association is established for TCI states in a TCI state pool configured by RRC;
         3. association between TCI states in a TCI state pool and identification information is determined based on association between the pool and identification information;
         4. association is indicated in a MAC CE; or
         5. association is indicated in DCI.

According to the foregoing beam information determining method, a unified TCI framework (unified TCI framework) may be applied to a multi-TRP scenario, and a terminal may determine beam information of a plurality of channels or RSs based on a unified TCI state indicated by a network-side device, to ensure that the terminal and the network-side device have consistent understanding on a beam to be used.

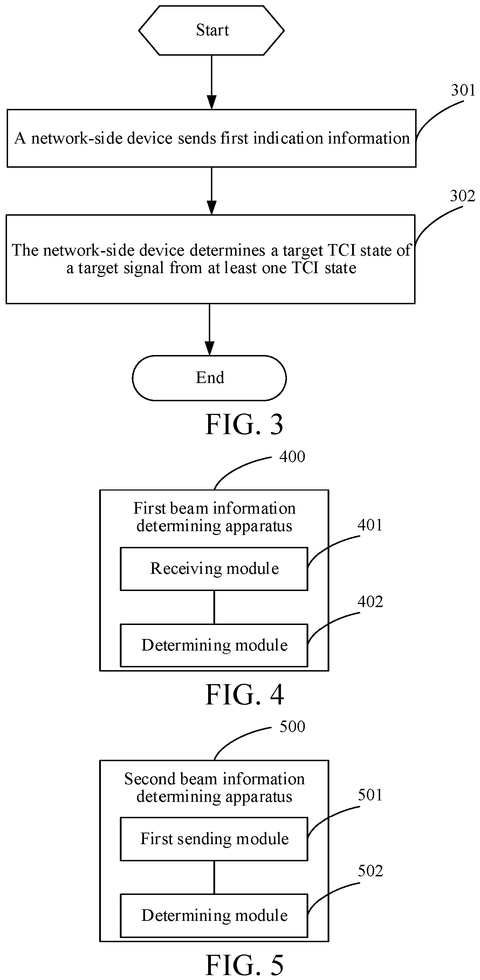

As shown in FIG. 3, an embodiment of this application provides a beam information determining method, including the following steps:
Step 301: A network-side device sends first indication information, where the first indication information is used for indicating at least one transmission configuration indicator TCI state.
Step 302: The network-side device determines a target TCI state of a target signal from the at least one TCI state, where the target TCI state is used for determining common beam information of the target signal.

The target signal includes at least one of the following:
(1) a first signal, where the first signal includes a control channel related to a control resource set CORESET or a physical downlink shared channel PDSCH associated with the control channel, and the first signal includes at least one of the following:
   (11) a first control channel in a CORESET associated only with a common search space CSS, or a first control channel in a CORESET associated with a CSS other than a CSS type 3;
   (12) a PDSCH associated with the first control channel;
   (13) a second control channel in a CORESET associated with a CSS and a user equipment-specific search space USS other than a CORESET#0, or a second control channel in a CORESET associated with a USS and a CSS other than the CSS type 3;
   (14) a PDSCH associated with the second control channel;
   (15) a third control channel in the CORESET#0; or
   (16) a PDSCH associated with the third control channel;
(2) a second signal, where the second signal includes a semi-persistent scheduling SPS PDSCH;
(3) a third signal, where the third signal includes a configured grant CG type 1 physical uplink shared channel PUSCH;
(4) a fourth signal, where the fourth signal includes a CG type 2 PUSCH;
(5) a fifth signal, where the fifth signal includes a physical uplink control channel PUCCH carrying periodic information, or a PUCCH carrying aperiodic information; or
(6) a sixth signal, where the sixth signal includes a channel state information reference signal CSI-RS or a sounding reference signal SRS.

In this embodiment, the network-side device sends the first indication information, where the first indication information is used for indicating the at least one transmission configuration indicator TCI state; and the network-side device determines the target TCI state of the target signal from the at least one TCI state, where the target TCI state is used for determining the common beam information of the target signal. In the foregoing manner, the network-side device may determine the target TCI state used by the target signal, to determine the common beam information of the target signal.

In some embodiments of this application, the first signal includes at least one of the following:
a first control channel in a CORESET associated only with a common search space CSS, or a first control channel in a CORESET associated with a CSS other than a CSS type 3;
a PDSCH associated with the first control channel;
a second control channel in a CORESET associated with a CSS and a user equipment-specific search space USS other than a CORESET#0, or a second control channel in a CORESET associated with a USS and a CSS other than the CSS type 3;
a PDSCH associated with the second control channel;
a third control channel in the CORESET#0; or
a PDSCH associated with the third control channel.

In some embodiments of this application, in a case that the first indication information is used for indicating a plurality of TCI states and each TCI state corresponds to one piece of identification information, the target TCI state of the first signal includes one of the following:
a TCI state, among the plurality of TCI states, that is arranged at a preset location;
a TCI state, among the plurality of TCI states, that corresponds to preset identification information;
a TCI state used by a channel in which the first indication information is located;
at least two of the plurality of TCI states, where the first signal is configured for repetition or multi-beam simultaneous transmission;
a first TCI state among the plurality of TCI states, where a quasi co-location type QCL-TypeD reference signal corresponding to the first TCI state and a synchronization signal block SSB associated with a serving cell physical cell identifier PCI meet QCL; or
a TCI state, among the plurality of TCI states, that is associated with identification information associated with a serving cell PCI.

In some embodiments of this application, in a case that the first indication information is used for indicating one TCI state, the target TCI state of the first signal includes the TCI state indicated by the first indication information; or
in a case that the first indication information is used for indicating one TCI state and the TCI state corresponds to preset identification information, the target TCI state of the first signal includes the TCI state; or
in a case that the first indication information is used for indicating one TCI state and the first signal is configured for repetition or multi-beam simultaneous transmission, the target TCI state of the first signal includes the TCI state; or
in a case that the first indication information is used for indicating one TCI state and a QCL-TypeD reference signal corresponding to the TCI state and an SSB associated with a serving cell PCI meet QCL, the target TCI state of the first signal includes the TCI state; or
in a case that the first indication information is used for indicating one TCI state and the TCI state is associated with identification information associated with a serving cell PCI, the target TCI state of the first signal includes the TCI state.

In some embodiments of this application, the method further includes the following step: In a case that the first signal is configured for repetition or multi-beam simultaneous transmission, the network-side device performs one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

In some embodiments of this application, before the network-side device determines the target TCI state of the target signal from the at least one TCI state, the method further includes the following step:

The network-side device determines, based on second indication information or an agreement in a protocol, to use a TCI state indicated by the first indication information for the target signal, where the second indication information is used for indicating whether to use a TCI state indicated by the first indication information for the target signal.

In some embodiments of this application, the second indication information or the agreement in the protocol includes one of the following:
a channel in which first radio resource control RRC signaling of the target signal is located is configured to use a TCI state indicated by the first indication information;
a CORESET in which a physical downlink control channel PDCCH associated with the second signal is located is configured to use a TCI state indicated by the first indication information;
a CORESET in which a PDCCH for scheduling the second signal is located is configured to use a TCI state indicated by the first indication information;
an SRS resource or an SRS resource set indicated by a sounding reference signal resource indicator SRI in configuration information of the third signal is configured to use a TCI state indicated by the first indication information;
an SRS resource or an SRS resource set indicated by an SRI in downlink control information DCI for activating the fourth signal is configured to use a TCI state indicated by the first indication information;
a CORESET in which DCI for activating the fourth signal is located is configured to use a TCI state indicated by the first indication information;
a CORESET in which a PDCCH associated with the fifth signal is located is configured to use a TCI state indicated by the first indication information;
a CORESET in which a PDCCH for scheduling the fifth signal is located is configured to use a TCI state indicated by the first indication information; or
a CORESET in which a PDCCH for triggering the sixth signal is located is configured to use a TCI state indicated by the first indication information.

In some embodiments of this application, a target TCI state of the second signal includes one of the following:
a TCI state used by a CORESET in which a PDCCH associated with the second signal is located;
a TCI state used by a CORESET in which a PDCCH for scheduling the second signal is located;
a TCI state that is indicated by first information and that is used for the second signal, where the first information is carried in a PDCCH associated with the second signal, or the first information is carried in a PDCCH for scheduling the second signal, or the first information is carried in configuration information of the second signal;
a preset TCI state among a plurality of TCI states of a first PDCCH, where the first PDCCH is a PDCCH associated with the second signal or a PDCCH for scheduling the second signal, and the first PDCCH is configured for repetition or multi-beam simultaneous transmission;
a second TCI state among the at least one TCI state, where a QCL-TypeD reference signal corresponding to the second TCI state and an SSB associated with a serving cell PCI meet QCL; or
a TCI state, among the at least one TCI state, that is associated with identification information associated with a serving cell PCI.

In some embodiments of this application, in a case that the first indication information is used for indicating a plurality of TCI states and each TCI state corresponds to one piece of identification information, a target TCI state of the third signal includes one of the following:
a TCI state used by a channel in which RRC configuration signaling of the third signal is located;
a TCI state, among the plurality of TCI states, that is arranged at a preset location;
a TCI state, among the plurality of TCI states, that corresponds to preset identification information;
a TCI state associated with identification information associated with the third signal;
a TCI state that is indicated by second information in configuration information of the third signal and that is used for the third signal; or
a TCI state used by an SRS resource or an SRS resource set indicated by an SRI in configuration information of the third signal, where
the third signal is configured for single-beam transmission.

In some embodiments of this application, in a case that the first indication information is used for indicating a plurality of TCI states and each TCI state corresponds to one piece of identification information, a target TCI state of the third signal includes one of the following:
at least two of the plurality of TCI states;
a TCI state that is indicated by second information in configuration information of the third signal and that is used for the third signal, where the number of TCI states indicated by the second information is greater than 1; or
a TCI state used by SRS resources or SRS resource sets indicated by a plurality of SRIs in configuration information of the third signal, where
the third signal is configured for multi-beam transmission.

In some embodiments of this application, in a case that the first indication information is used for indicating one TCI state, a target TCI state of the third signal includes the TCI state; or
in a case that the first indication information is used for indicating one TCI state and the TCI state corresponds to the same identification information as the third signal or the TCI state is associated with the third signal, a target TCI state of the third signal includes the TCI state; or
in a case that the first indication information is used for indicating one TCI state and a TCI state indicated by second information is the TCI state, a target TCI state of the third signal includes the TCI state, where the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal includes the TCI state; or
in a case that the first indication information is used for indicating one TCI state and the third signal is configured for repetition or multi-beam simultaneous transmission, a target TCI state of the third signal includes the TCI state.

In some embodiments of this application, the method further includes the following step: In a case that the third signal is configured for repetition or multi-beam simultaneous transmission, the network-side device performs one of the following operations:
in a case that the third signal is configured for repetition, performing repetition by using the TCI state; or
updating, to the TCI state, a preset TCI state among TCI states used by current repetition or multi-beam simultaneous transmission.

In some embodiments of this application, in a case that the first indication information is used for indicating a plurality of TCI states and each TCI state corresponds to one piece of identification information, a target TCI state of the fourth signal includes one of the following:
a TCI state used by a channel in which RRC configuration signaling of the fourth signal is located;
a TCI state, among the plurality of TCI states, that is arranged at a preset location;
a TCI state, among the plurality of TCI states, that corresponds to preset identification information;
a TCI state associated with identification information associated with the fourth signal;
a TCI state that is indicated by third information and that is used for the fourth signal, where the third information is carried in DCI for activating the fourth signal;
a TCI state used by an SRS resource or an SRS resource set indicated by an SRI in DCI for activating the fourth signal;
a TCI state used by a PDCCH in which DCI for activating the fourth signal is located; or
a preset TCI state among TCI states used by a PDCCH in which DCI for activating the fourth signal is located, where
the fourth signal is configured for single-beam transmission.

In some embodiments of this application, in a case that the first indication information is used for indicating a plurality of TCI states and each TCI state corresponds to one piece of identification information, a target TCI state of the fourth signal includes one of the following:
at least two of the plurality of TCI states;
a TCI state that is indicated by third information and that is used for the fourth signal, where the third information is carried in DCI for activating the fourth signal, and the number of TCI states indicated by the third information is greater than 1;
a TCI state used by SRS resources or SRS resource sets indicated by a plurality of SRIs in DCI for activating the fourth signal; or
a TCI state used by a PDCCH in which DCI for activating the fourth signal is located, where
the fourth signal is configured for multi-beam transmission.

In some embodiments of this application, in a case that the first indication information is used for indicating one TCI state, a target TCI state of the fourth signal includes the TCI state; or
in a case that the first indication information is used for indicating one TCI state and the TCI state corresponds to the same identification information as the fourth signal or the TCI state is associated with the fourth signal, a target TCI state of the fourth signal includes the TCI state; or
in a case that the first indication information is used for indicating one TCI state and a TCI state indicated by third information is the TCI state, a target TCI state of the fourth signal includes the TCI state, where the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal includes the TCI state; or
in a case that the first indication information is used for indicating one TCI state, a target TCI state of the fourth signal includes a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal includes the TCI state.

In some embodiments of this application, the method further includes the following step: In a case that the fourth signal is configured for repetition or multi-beam simultaneous transmission, the network-side device performs one of the following operations:
in a case that the fourth signal is configured for repetition, performing repetition by using the TCI state; or
updating, to the TCI state, a preset TCI state among TCI states used by current repetition or multi-beam simultaneous transmission.

In some embodiments of this application, in a case that the first indication information is used for indicating a plurality of TCI states and each TCI state corresponds to one piece of identification information, a target TCI state of the fifth signal includes one of the following:
at least two of the plurality of TCI states;
a TCI state, among the plurality of TCI states, that is arranged at a preset location;
a TCI state, among the plurality of TCI states, that corresponds to preset identification information;
a TCI state associated with identification information associated with the fifth signal;
a TCI state that is indicated by fourth information and that is used for the fifth signal, where the fourth information is carried in configuration information of the fifth signal;
a TCI state that is indicated by fifth information and that is used for the fifth signal, where the fifth information is carried in DCI indicating the fifth signal, and the fifth signal is a PUCCH carrying aperiodic information;
a TCI state that is indicated by sixth information and that is used for the fifth signal, where the sixth information is used for activating or indicating a TCI state; or
a TCI state used by a second PDCCH, where the second PDCCH is a PDCCH indicating the PUCCH carrying aperiodic information.

In some embodiments of this application, in a case that the first indication information is used for indicating one TCI state, a target TCI state of the fifth signal includes the TCI state; or
in a case that the first indication information is used for indicating one TCI state and the TCI state corresponds to the same identification information as the fifth signal or the TCI state is associated with the fifth signal, a target TCI state of the fifth signal includes the TCI state; or
in a case that the first indication information is used for indicating one TCI state and a TCI state indicated by fourth information is the TCI state, a target TCI state of the fifth signal includes the TCI state, where the fourth information is carried in configuration information of the fifth signal; or
in a case that the first indication information is used is for indicating one TCI state and a TCI state indicated by fifth information is the TCI state, a target TCI state of the fifth signal includes the TCI state, where the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal includes the TCI state, where the sixth information is used for activating or indicating a TCI state; or
in a case that the first indication information is used for indicating one TCI state, a TCI state used by a second PDCCH, where the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal includes the TCI state.

In some embodiments of this application, the method further includes the following step: In a case that the fifth signal is configured for repetition or multi-beam simultaneous transmission, the network-side device performs one of the following operations:
in a case that the fifth signal is configured for repetition, performing repetition by using the TCI state; or
updating, to the TCI state, a preset TCI state among TCI states used by current repetition or multi-beam simultaneous transmission.

In some embodiments of this application, M resource sets are configured, activated, or triggered on the network-side device, each of N resource sets among the M resource sets includes at least one resource group, each resource group includes at least one sixth signal resource, and each of the M resource sets other than the N resource sets includes at least one sixth signal resource, where M is a positive integer greater than 1, and N is an integer greater than or equal to 0 and less than or equal to M. In a case that the first indication information is used for indicating a plurality of TCI states and each TCI state corresponds to one piece of identification information, a TCI state used by the sixth signal meets one of the following:
the sixth signal in a target resource set uses a TCI state associated with the same identification information as the target resource set, where the target resource set is any one of the M resource sets;
the sixth signal in a target resource group uses a TCI state associated with the same identification information as the target resource group, where the target resource group is any one of resource groups included in the N resource sets;
the sixth signal uses a TCI state associated with the same identification information as the sixth signal resource;
the sixth signal in the target resource set uses a TCI state associated with the target resource set;
the sixth signal in the target resource group uses a TCI state associated with the target resource group;
the sixth signal uses a TCI state associated with the sixth signal resource;
the sixth signal uses a TCI state used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a Media Access Control control element MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

In some embodiments of this application, M resource sets are configured, activated, or triggered on the network-side device, each of N resource sets among the M resource sets includes at least one resource group, each resource group includes at least one sixth signal resource, and each of the M resource sets other than the N resource sets includes at least one sixth signal resource, where M is a positive integer greater than 1, and N is an integer greater than or equal to 0 and less than or equal to M. In a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, where the target resource set is any one of the M resource sets;
in a case that the TCI state is associated with the same identification information as a target resource group, the sixth signal in the target resource group uses the TCI state, where the target resource group is any one of resource groups included in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, where the seventh information is carried in configuration information of the sixth signal;
in a case that a TCI state that is indicated by eighth information and that is used for the sixth signal is the TCI state, the sixth signal uses the TCI state, where the eighth information is carried in MAC CE signaling for activating the sixth signal;
in a case that a TCI state that is indicated by ninth information and that is used for the sixth signal is the TCI state, the sixth signal uses the TCI state, where the ninth information is carried in DCI for triggering the sixth signal;
in a case that a TCI state that is indicated by tenth information and that is used for the sixth signal is the TCI state, the sixth signal uses the TCI state, where the tenth information is used for activating or indicating a TCI state; or
the sixth signal uses a TCI state used by a PDCCH for triggering the sixth signal, where the sixth signal is an aperiodic signal.

In some embodiments of this application, one resource set is configured, activated, or triggered on the network-side device. The resource set includes at least one resource group, and each resource group includes at least one sixth signal resource. Alternatively, the resource set does not include a resource group, and the resource set includes at least one sixth signal resource. In a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, where the target resource group is any one of resource groups included in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

In some embodiments of this application, the first indication information is carried in target DCI, and the first indication information indicates a plurality of TCI states by indicating a first code point, or the first indication information indicates one TCI state by indicating a second code point, where a MAC CE for activating a TCI state includes the first code point and the second code point, and a TCI state corresponding to the first code point is one of the following:
a plurality of joint TCI states;
a plurality of pairs of TCI states, where each pair of TCI states includes a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
   a joint TCI state;
   a DL TCI state and a UL TCI state;
   a separate DL TCI state; or
   a separate UL TCI state.

In some embodiments of this application, a MAC CE for activating a TCI state includes a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI includes one or more pieces of DCI, and the first indication information indicates a TCI state in at least one of the following manners:
   in a case that the DCI includes one indicator field and the indicator field indicates the third code point, the first indication information indicates one TCI state by using one piece of DCI;
   in a case that the DCI includes a plurality of indicator fields and each indicator field indicates one third code point, the first indication information indicates a plurality of TCI states by using one piece of DCI;
   in a case that the DCI includes a plurality of indicator fields and only one of the plurality of indicator fields is effective, the first indication information indicates one TCI state by using one piece of DCI; or
   in a case that the DCI includes a plurality of indicator fields and the plurality of indicator fields indicate a same third code point, the first indication information indicates one TCI state by using one piece of DCI.

In some embodiments of this application, a target code point includes the first code point, the second code point, or the third code point, a TCI state corresponding to the target code point has an association relationship with identification information, and the association relationship is determined based on at least one of the following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

In some embodiments of this application, in a case that the first indication information is used for indicating a plurality of TCI states and each TCI state corresponds to one piece of identification information, the target TCI state of the target signal includes: a TCI state, among the plurality of TCI states, that is indicated by third indication information and that is used for the target signal, where the third indication information is used for activating or indicating a TCI state.

In some embodiments of this application, in a case that the first indication information is used for indicating one TCI state and third indication information indicates that the TCI state is used for the target signal, the target TCI state of the target signal includes the TCI state, where the third indication information is used for activating or indicating a TCI state.

In some embodiments of this application, the identification information includes at least one of the following:
channel group identification information;
CORESET group identification information;
CORESET identification information;
PUCCH resource group identification information;
CORESET pool identifier;
PCI;
a TCI state identifier;
an identifier of an antenna panel of the terminal;
an identifier of a capability value of the terminal; or
an identifier of a capability value set of the terminal.

The embodiment shown in FIG. 3 is an embodiment for the network-side device and has a correspondence with the terminal-side embodiment shown in FIG. 2. For example, information received on the terminal side is sent by the network-side device. For details about technical features related to the network-side device, refer to the terminal-side descriptions. Details are not described herein again.

The beam information determining method provided in the embodiments of this application may be performed by a beam information determining apparatus. In the embodiments of this application, a beam information determining apparatus provided in the embodiments of this application is described by using an example in which the beam information determining apparatus performs the beam information determining method.

As shown in FIG. 4, an embodiment of this application provides a beam information determining apparatus. A first beam information determining apparatus 400 includes:
a receiving module 401, configured to receive first indication information from a network-side device, where the first indication information is used for indicating at least one transmission configuration indicator TCI state; and
a determining module 402, configured to determine, for the terminal, a target TCI state of a target signal from the at least one TCI state in a case of determining to use a TCI state indicated by the first indication information for the target signal, where the target TCI state is used for determining common beam information of a plurality of channels.

Optionally, the target signal includes at least one of the following:
a first signal, where the first signal includes a control channel related to a control resource set CORESET or a physical downlink shared channel PDSCH associated with the control channel;
a second signal, where the second signal includes a semi-persistent scheduling SPS PDSCH;
a third signal, where the third signal includes a configured grant CG type 1 physical uplink shared channel PUSCH;
a fourth signal, where the fourth signal includes a CG type 2 PUSCH;
a fifth signal, where the fifth signal includes a physical uplink control channel PUCCH carrying periodic information, or a PUCCH carrying aperiodic information; or
a sixth signal, where the sixth signal includes a channel state information reference signal CSI-RS or a sounding reference signal SRS.

Optionally, the first signal includes at least one of the following:
a first control channel in a CORESET associated only with a common search space CSS, or a first control channel in a CORESET associated with a CSS other than a CSS type 3;
a PDSCH associated with the first control channel;
a second control channel in a CORESET associated with a CSS and a user equipment-specific search space USS other than a CORESET#0, or a second control channel in a CORESET associated with a USS and a CSS other than the CSS type 3;
a PDSCH associated with the second control channel;
a third control channel in the CORESET#0; or
a PDSCH associated with the third control channel.

Optionally, in a case that the first indication information is used for indicating a plurality of TCI states and each TCI state corresponds to one piece of identification information, the target TCI state of the first signal includes one of the following:
a TCI state, among the plurality of TCI states, that is arranged at a preset location;
a TCI state, among the plurality of TCI states, that corresponds to preset identification information;
a TCI state used by a channel in which the first indication information is located;
at least two of the plurality of TCI states, where the first signal is configured for repetition or multi-beam simultaneous transmission;
a first TCI state among the plurality of TCI states, where a quasi co-location type QCL-TypeD reference signal corresponding to the first TCI state and a synchronization signal block SSB associated with a serving cell physical cell identifier PCI meet QCL; or
a TCI state, among the plurality of TCI states, that is associated with identification information associated with a serving cell PCI.

Optionally, in a case that the first indication information is used for indicating one TCI state, the target TCI state of the first signal includes the TCI state indicated by the first indication information; or
in a case that the first indication information is used for indicating one TCI state and the TCI state corresponds to preset identification information, the target TCI state of the first signal includes the TCI state; or
in a case that the first indication information is used for indicating one TCI state and the first signal is configured for repetition or multi-beam simultaneous transmission, the target TCI state of the first signal includes the TCI state; or
in a case that the first indication information is used for indicating one TCI state and a QCL-TypeD reference signal corresponding to the TCI state and an SSB associated with a serving cell PCI meet QCL, the target TCI state of the first signal includes the TCI state; or
in a case that the first indication information is used for indicating one TCI state and the TCI state is associated with identification information associated with a serving cell PCI, the target TCI state of the first signal includes the TCI state.

Optionally, the apparatus 400 further includes a first execution module, configured to: in a case that the first signal is configured for repetition or multi-beam simultaneous transmission, perform one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

Optionally, the apparatus 400 further includes a second determining module, configured to determine, based on second indication information or an agreement in a protocol, to use a TCI state indicated by the first indication information for the target signal, where the second indication information is used for indicating whether to use a TCI state indicated by the first indication information for the target signal, and the second indication information is sent by the network-side device; and
the determining module 402 is configured to determine the target TCI state of the target signal from the at least one TCI state.

Optionally, the first indication information or the agreement in the protocol includes one of the following:
a channel in which first radio resource control RRC signaling of the target signal is located is configured to use a TCI state indicated by the first indication information;
a CORESET in which a physical downlink control channel PDCCH associated with the second signal is located is configured to use a TCI state indicated by the first indication information;
a CORESET in which a PDCCH for scheduling the second signal is located is configured to use a TCI state indicated by the first indication information;
an SRS resource or an SRS resource set indicated by a sounding reference signal resource indicator SRI in configuration information of the third signal is configured to use a TCI state indicated by the first indication information;
an SRS resource or an SRS resource set indicated by an SRI in downlink control information DCI for activating the fourth signal is configured to use a TCI state indicated by the first indication information;
a CORESET in which DCI for activating the fourth signal is located is configured to use a TCI state indicated by the first indication information;
a CORESET in which a PDCCH associated with the fifth signal is located is configured to use a TCI state indicated by the first indication information;
a CORESET in which a PDCCH for scheduling the fifth signal is located is configured to use a TCI state indicated by the first indication information; or
a CORESET in which a PDCCH for triggering the sixth signal is located is configured to use a TCI state indicated by the first indication information.

Optionally, a target TCI state of the second signal includes one of the following:
a TCI state used by a CORESET in which a PDCCH associated with the second signal is located;
a TCI state used by a CORESET in which a PDCCH for scheduling the second signal is located;
a TCI state that is indicated by first information and that is used for the second signal, where the first information is carried in a PDCCH associated with the second signal, or the first information is carried in a PDCCH for scheduling the second signal, or the first information is carried in configuration information of the second signal;
a preset TCI state among a plurality of TCI states of a first PDCCH, where the first PDCCH is a PDCCH associated with the second signal or a PDCCH for scheduling the second signal, and the first PDCCH is configured for repetition or multi-beam simultaneous transmission;
a second TCI state among the at least one TCI state, where a QCL-TypeD reference signal corresponding to the second TCI state and an SSB associated with a serving cell PCI meet QCL; or
a TCI state, among the at least one TCI state, that is associated with identification information associated with a serving cell PCI.

Optionally, in a case that the first indication information is used for indicating a plurality of TCI states and each TCI state corresponds to one piece of identification information, a target TCI state of the third signal includes one of the following:
a TCI state used by a channel in which RRC configuration signaling of the third signal is located;
a TCI state, among the plurality of TCI states, that is arranged at a preset location;
a TCI state, among the plurality of TCI states, that corresponds to preset identification information;
a TCI state associated with identification information associated with the third signal;
a TCI state that is indicated by second information in configuration information of the third signal and that is used for the third signal; or
a TCI state used by an SRS resource or an SRS resource set indicated by an SRI in configuration information of the third signal, where
the third signal is configured for single-beam transmission.

Optionally, in a case that the first indication information is used for indicating a plurality of TCI states and each TCI state corresponds to one piece of identification information, a target TCI state of the third signal includes one of the following:
at least two of the plurality of TCI states;
a TCI state that is indicated by second information in configuration information of the third signal and that is used for the third signal, where the number of TCI states indicated by the second information is greater than 1; or
a TCI state used by SRS resources or SRS resource sets indicated by a plurality of SRIs in configuration information of the third signal, where
the third signal is configured for multi-beam transmission.

Optionally, in a case that the first indication information is used for indicating one TCI state, a target TCI state of the third signal includes the TCI state; or
in a case that the first indication information is used for indicating one TCI state and the TCI state corresponds to the same identification information as the third signal or the TCI state is associated with the third signal, a target TCI state of the third signal includes the TCI state; or
in a case that the first indication information is used for indicating one TCI state and a TCI state indicated by second information is the TCI state, a target TCI state of the third signal includes the TCI state, where the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal includes the TCI state; or
in a case that the first indication information is used for indicating one TCI state and the third signal is configured for repetition or multi-beam simultaneous transmission, a target TCI state of the third signal includes the TCI state.

Optionally, the apparatus 400 further includes a second execution module, configured to: in a case that the third signal is configured for repetition or multi-beam simultaneous transmission, perform one of the following operations:
in a case that the third signal is configured for repetition, performing repetition by using the TCI state; or
updating, to the TCI state, a preset TCI state among TCI states used by current repetition or multi-beam simultaneous transmission.

Optionally, in a case that the first indication information is used for indicating a plurality of TCI states and each TCI state corresponds to one piece of identification information, a target TCI state of the fourth signal includes one of the following:
a TCI state used by a channel in which RRC configuration signaling of the fourth signal is located;
a TCI state, among the plurality of TCI states, that is arranged at a preset location;
a TCI state, among the plurality of TCI states, that corresponds to preset identification information;
a TCI state associated with identification information associated with the fourth signal;
a TCI state that is indicated by third information and that is used for the fourth signal, where the third information is carried in DCI for activating the fourth signal;
a TCI state used by an SRS resource or an SRS resource set indicated by an SRI in DCI for activating the fourth signal;
a TCI state used by a PDCCH in which DCI for activating the fourth signal is located; or
a preset TCI state among TCI states used by a PDCCH in which DCI for activating the fourth signal is located, where
the fourth signal is configured for single-beam transmission.

Optionally, in a case that the first indication information is used for indicating a plurality of TCI states and each TCI state corresponds to one piece of identification information, a target TCI state of the fourth signal includes one of the following:
at least two of the plurality of TCI states;
a TCI state that is indicated by third information and that is used for the fourth signal, where the third information is carried in DCI for activating the fourth signal, and the number of TCI states indicated by the third information is greater than 1;
a TCI state used by SRS resources or SRS resource sets indicated by a plurality of SRIs in DCI for activating the fourth signal; or
a TCI state used by a PDCCH in which DCI for activating the fourth signal is located, where
the fourth signal is configured for multi-beam transmission.

Optionally, in a case that the first indication information is used for indicating one TCI state, a target TCI state of the fourth signal includes the TCI state; or
in a case that the first indication information is used for indicating one TCI state and the TCI state corresponds to the same identification information as the fourth signal or the TCI state is associated with the fourth signal, a target TCI state of the fourth signal includes the TCI state; or
in a case that the first indication information is used for indicating one TCI state and a TCI state indicated by third information is the TCI state, a target TCI state of the fourth signal includes the TCI state, where the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal includes the TCI state; or
in a case that the first indication information is used for indicating one TCI state, a target TCI state of the fourth signal includes a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal includes the TCI state.

Optionally, the apparatus 400 further includes a third execution module, configured to: in a case that the fourth signal is configured for repetition or multi-beam simultaneous transmission, perform one of the following operations:
in a case that the fourth signal is configured for repetition, performing repetition by using the TCI state; or
updating, to the TCI state, a preset TCI state among TCI states used by current repetition or multi-beam simultaneous transmission.

Optionally, in a case that the first indication information is used for indicating a plurality of TCI states and each TCI state corresponds to one piece of identification information, a target TCI state of the fifth signal includes one of the following:
at least two of the plurality of TCI states;
a TCI state, among the plurality of TCI states, that is arranged at a preset location;
a TCI state, among the plurality of TCI states, that corresponds to preset identification information;
a TCI state associated with identification information associated with the fifth signal;
a TCI state that is indicated by fourth information and that is used for the fifth signal, where the fourth information is carried in configuration information of the fifth signal;
a TCI state that is indicated by fifth information and that is used for the fifth signal, where the fifth information is carried in DCI indicating the fifth signal, and the fifth signal is a PUCCH carrying aperiodic information;
a TCI state that is indicated by sixth information and that is used for the fifth signal, where the sixth information is used for activating or indicating a TCI state; or
a TCI state used by a second PDCCH, where the second PDCCH is a PDCCH indicating the PUCCH carrying aperiodic information.

Optionally, in a case that the first indication information is used for indicating one TCI state, a target TCI state of the fifth signal includes the TCI state; or
in a case that the first indication information is used for indicating one TCI state and the TCI state corresponds to the same identification information as the fifth signal or the TCI state is associated with the fifth signal, a target TCI state of the fifth signal includes the TCI state; or
in a case that the first indication information is used for indicating one TCI state and a TCI state indicated by fourth information is the TCI state, a target TCI state of the fifth signal includes the TCI state, where the fourth information is carried in configuration information of the fifth signal; or
in a case that the first indication information is used is for indicating one TCI state and a TCI state indicated by fifth information is the TCI state, a target TCI state of the fifth signal includes the TCI state, where the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal includes the TCI state, where the sixth information is used for activating or indicating a TCI state; or
in a case that the first indication information is used for indicating one TCI state, a TCI state used by a second PDCCH, where the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal includes the TCI state.

Optionally, the apparatus 400 further includes a fourth execution module, configured to: in a case that the fifth signal is configured for repetition or multi-beam simultaneous transmission, perform one of the following operations:
in a case that the fifth signal is configured for repetition, performing repetition by using the TCI state; or
updating, to the TCI state, a preset TCI state among TCI states used by current repetition or multi-beam simultaneous transmission.

Optionally, M resource sets are configured, activated, or triggered on the network-side device, each of N resource sets among the M resource sets includes at least one resource group, each resource group includes at least one sixth signal resource, each of the M resource sets other than the N resource sets includes at least one sixth signal resource, M is a positive integer greater than 1, N is an integer greater than or equal to 0 and less than or equal to M, and in a case that the first indication information is used for indicating a plurality of TCI states and each TCI state corresponds to one piece of identification information, a TCI state used by the sixth signal meets one of the following:
the sixth signal in a target resource set uses a TCI state associated with the same identification information as the target resource set, where the target resource set is any one of the M resource sets;
the sixth signal in a target resource group uses a TCI state associated with the same identification information as the target resource group, where the target resource group is any one of resource groups included in the N resource sets;
the sixth signal uses a TCI state associated with the same identification information as the sixth signal resource;
the sixth signal in the target resource set uses a TCI state associated with the target resource set;
the sixth signal in the target resource group uses a TCI state associated with the target resource group;
the sixth signal uses a TCI state associated with the sixth signal resource;
the sixth signal uses a TCI state used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a Media Access Control control element MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

Optionally, M resource sets are configured, activated, or triggered on the network-side device, each of N resource sets among the M resource sets includes at least one resource group, each resource group includes at least one sixth signal resource, each of the M resource sets other than the N resource sets includes at least one sixth signal resource, M is a positive integer greater than 1, N is an integer greater than or equal to 0 and less than or equal to M, and in a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, where the target resource set is any one of the M resource sets;
in a case that the TCI state is associated with the same identification information as a target resource group, the sixth signal in the target resource group uses the TCI state, where the target resource group is any one of resource groups included in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, where the seventh information is carried in configuration information of the sixth signal;
in a case that a TCI state that is indicated by eighth information and that is used for the sixth signal is the TCI state, the sixth signal uses the TCI state, where the eighth information is carried in MAC CE signaling for activating the sixth signal;
in a case that a TCI state that is indicated by ninth information and that is used for the sixth signal is the TCI state, the sixth signal uses the TCI state, where the ninth information is carried in DCI for triggering the sixth signal;
in a case that a TCI state that is indicated by tenth information and that is used for the sixth signal is the TCI state, the sixth signal uses the TCI state, where the tenth information is used for activating or indicating a TCI state; or
the sixth signal uses a TCI state used by a PDCCH for triggering the sixth signal, where the sixth signal is an aperiodic signal.

Optionally, one resource set is configured, activated, or triggered on the network-side device; the resource set includes at least one resource group, and each resource group includes at least one sixth signal resource; or the resource set does not include a resource group, and the resource set includes at least one sixth signal resource; and in a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, where the target resource group is any one of resource groups included in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

Optionally, the first indication information is carried in target DCI, and the first indication information indicates a plurality of TCI states by indicating a first code point, or the first indication information indicates one TCI state by indicating a second code point, where a MAC CE for activating a TCI state includes the first code point and the second code point, and a TCI state corresponding to the first code point is one of the following:
a plurality of joint TCI states;
a plurality of pairs of TCI states, where each pair of TCI states includes a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
   a joint TCI state;
   a DL TCI state and a UL TCI state;
   a separate DL TCI state; or
   a separate UL TCI state.

Optionally, a MAC CE for activating a TCI state includes a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI includes one or more pieces of DCI, and the first indication information indicates a TCI state in at least one of the following manners:
   in a case that the DCI includes one indicator field and the indicator field indicates the third code point, the first indication information indicates one TCI state by using one piece of DCI;
   in a case that the DCI includes a plurality of indicator fields and each indicator field indicates one third code point, the first indication information indicates a plurality of TCI states by using one piece of DCI;
   in a case that the DCI includes a plurality of indicator fields and only one of the plurality of indicator fields is effective, the first indication information indicates one TCI state by using one piece of DCI; or
   in a case that the DCI includes a plurality of indicator fields and the plurality of indicator fields indicate a same third code point, the first indication information indicates one TCI state by using one piece of DCI.

Optionally, a target code point includes the first code point, the second code point, or the third code point, a TCI state corresponding to the target code point has an association relationship with identification information, and the association relationship is determined based on at least one of the following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

Optionally, in a case that the first indication information is used for indicating a plurality of TCI states and each TCI state corresponds to one piece of identification information, the target TCI state of the target signal includes: a TCI state, among the plurality of TCI states, that is indicated by third indication information and that is used for the target signal, where the third indication information is used for activating or indicating a TCI state.

Optionally, in a case that the first indication information is used for indicating one TCI state and third indication information indicates that the TCI state is used for the target signal, the target TCI state of the target signal includes the TCI state, where the third indication information is used for activating or indicating a TCI state.

Optionally, the identification information includes at least one of the following:
channel group identification information;
CORESET group identification information;
CORESET identification information;
PUCCH resource group identification information;
CORESET pool identifier;
PCI;
a TCI state identifier;
an identifier of an antenna panel of the terminal;
an identifier of a capability value of the terminal; or
an identifier of a capability value set of the terminal.

The first beam information determining apparatus 400 provided in this embodiment of this application is capable of implementing the processes implemented in the method embodiment of FIG. 2, with the same technical effect achieved. To avoid repetition, details are not described herein again.

The beam information determining method provided in the embodiments of this application may be performed by a beam information determining apparatus. In the embodiments of this application, a beam information determining apparatus provided in the embodiments of this application is described by using an example in which the beam information determining apparatus performs the beam information determining method.

As shown in FIG. 5, an embodiment of this application provides a beam information determining apparatus. A second beam information determining apparatus 500 includes:
a first sending module 501, configured to send first indication information, where the first indication information is used for indicating at least one transmission configuration indicator TCI state; and
a determining module 502, configured to determine a target TCI state of a target signal from the at least one TCI state, where the target TCI state is used for determining common beam information of the target signal.

Optionally, the target signal includes at least one of the following:
a first signal, where the first signal includes a control channel related to a control resource set CORESET or a physical downlink shared channel PDSCH associated with the control channel;
a second signal, where the second signal includes a semi-persistent scheduling SPS PDSCH;
a third signal, where the third signal includes a configured grant CG type 1 physical uplink shared channel PUSCH;
a fourth signal, where the fourth signal includes a CG type 2 PUSCH;
a fifth signal, where the fifth signal includes a physical uplink control channel PUCCH carrying periodic information, or a PUCCH carrying aperiodic information; or
a sixth signal, where the sixth signal includes a channel state information reference signal CSI-RS or a sounding reference signal SRS.

Optionally, the first signal includes at least one of the following:
a first control channel in a CORESET associated only with a common search space CSS, or a first control channel in a CORESET associated with a CSS other than a CSS type 3;
a PDSCH associated with the first control channel;
a second control channel in a CORESET associated with a CSS and a user equipment-specific search space USS other than a CORESET#0, or a second control channel in a CORESET associated with a USS and a CSS other than the CSS type 3;
a PDSCH associated with the second control channel;
a third control channel in the CORESET#0; or
a PDSCH associated with the third control channel.

Optionally, in a case that the first indication information is used for indicating a plurality of TCI states and each TCI state corresponds to one piece of identification information, the target TCI state of the first signal includes one of the following:
a TCI state, among the plurality of TCI states, that is arranged at a preset location;
a TCI state, among the plurality of TCI states, that corresponds to preset identification information;
a TCI state used by a channel in which the first indication information is located;
at least two of the plurality of TCI states, where the first signal is configured for repetition or multi-beam simultaneous transmission;
a first TCI state among the plurality of TCI states, where a quasi co-location type QCL-TypeD reference signal corresponding to the first TCI state and a synchronization signal block SSB associated with a serving cell physical cell identifier PCI meet QCL; or
a TCI state, among the plurality of TCI states, that is associated with identification information associated with a serving cell PCI.

Optionally, in a case that the first indication information is used for indicating one TCI state, the target TCI state of the first signal includes the TCI state indicated by the first indication information; or
in a case that the first indication information is used for indicating one TCI state and the TCI state corresponds to preset identification information, the target TCI state of the first signal includes the TCI state; or
in a case that the first indication information is used for indicating one TCI state and the first signal is configured for repetition or multi-beam simultaneous transmission, the target TCI state of the first signal includes the TCI state; or
in a case that the first indication information is used for indicating one TCI state and a QCL-TypeD reference signal corresponding to the TCI state and an SSB associated with a serving cell PCI meet QCL, the target TCI state of the first signal includes the TCI state; or
in a case that the first indication information is used for indicating one TCI state and the TCI state is associated with identification information associated with a serving cell PCI, the target TCI state of the first signal includes the TCI state.

Optionally, the apparatus further includes a first execution module, configured to: in a case that the first signal is configured for repetition or multi-beam simultaneous transmission, perform one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

Optionally, the apparatus further includes a second determining module, configured to determine, based on second indication information or an agreement in a protocol, to use a TCI state indicated by the first indication information for the target signal, where the second indication information is used for indicating whether to use a TCI state indicated by the first indication information for the target signal.

Optionally, the second indication information or the agreement in the protocol includes one of the following:
a channel in which first radio resource control RRC signaling of the target signal is located is configured to use a TCI state indicated by the first indication information;
a CORESET in which a physical downlink control channel PDCCH associated with the second signal is located is configured to use a TCI state indicated by the first indication information;
a CORESET in which a PDCCH for scheduling the second signal is located is configured to use a TCI state indicated by the first indication information;
an SRS resource or an SRS resource set indicated by a sounding reference signal resource indicator SRI in configuration information of the third signal is configured to use a TCI state indicated by the first indication information;
an SRS resource or an SRS resource set indicated by an SRI in downlink control information DCI for activating the fourth signal is configured to use a TCI state indicated by the first indication information;
a CORESET in which DCI for activating the fourth signal is located is configured to use a TCI state indicated by the first indication information;
a CORESET in which a PDCCH associated with the fifth signal is located is configured to use a TCI state indicated by the first indication information;
a CORESET in which a PDCCH for scheduling the fifth signal is located is configured to use a TCI state indicated by the first indication information; or
a CORESET in which a PDCCH for triggering the sixth signal is located is configured to use a TCI state indicated by the first indication information.

Optionally, a target TCI state of the second signal includes one of the following:
a TCI state used by a CORESET in which a PDCCH associated with the second signal is located;
a TCI state used by a CORESET in which a PDCCH for scheduling the second signal is located;
a TCI state that is indicated by first information and that is used for the second signal, where the first information is carried in a PDCCH associated with the second signal, or the first information is carried in a PDCCH for scheduling the second signal, or the first information is carried in configuration information of the second signal;
a preset TCI state among a plurality of TCI states of a first PDCCH, where the first PDCCH is a PDCCH associated with the second signal or a PDCCH for scheduling the second signal, and the first PDCCH is configured for repetition or multi-beam simultaneous transmission;
a second TCI state among the at least one TCI state, where a QCL-TypeD reference signal corresponding to the second TCI state and an SSB associated with a serving cell PCI meet QCL; or
a TCI state, among the at least one TCI state, that is associated with identification information associated with a serving cell PCI.

Optionally, in a case that the first indication information is used for indicating a plurality of TCI states and each TCI state corresponds to one piece of identification information, a target TCI state of the third signal includes one of the following:
a TCI state used by a channel in which RRC configuration signaling of the third signal is located;
a TCI state, among the plurality of TCI states, that is arranged at a preset location;
a TCI state, among the plurality of TCI states, that corresponds to preset identification information;
a TCI state associated with identification information associated with the third signal;
a TCI state that is indicated by second information in configuration information of the third signal and that is used for the third signal; or
a TCI state used by an SRS resource or an SRS resource set indicated by an SRI in configuration information of the third signal, where
the third signal is configured for single-beam transmission.

Optionally, in a case that the first indication information is used for indicating a plurality of TCI states and each TCI state corresponds to one piece of identification information, a target TCI state of the third signal includes one of the following:
at least two of the plurality of TCI states;
a TCI state that is indicated by second information in configuration information of the third signal and that is used for the third signal, where the number of TCI states indicated by the second information is greater than 1; or
a TCI state used by SRS resources or SRS resource sets indicated by a plurality of SRIs in configuration information of the third signal, where
the third signal is configured for multi-beam transmission.

Optionally, in a case that the first indication information is used for indicating one TCI state, a target TCI state of the third signal includes the TCI state; or
in a case that the first indication information is used for indicating one TCI state and the TCI state corresponds to the same identification information as the third signal or the TCI state is associated with the third signal, a target TCI state of the third signal includes the TCI state; or
in a case that the first indication information is used for indicating one TCI state and a TCI state indicated by second information is the TCI state, a target TCI state of the third signal includes the TCI state, where the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal includes the TCI state; or
in a case that the first indication information is used for indicating one TCI state and the third signal is configured for repetition or multi-beam simultaneous transmission, a target TCI state of the third signal includes the TCI state.

Optionally, the apparatus further includes a second execution module, configured to: in a case that the third signal is configured for repetition or multi-beam simultaneous transmission, perform one of the following operations:
in a case that the third signal is configured for repetition, performing repetition by using the TCI state; or
updating, to the TCI state, a preset TCI state among TCI states used by current repetition or multi-beam simultaneous transmission.

Optionally, in a case that the first indication information is used for indicating a plurality of TCI states and each TCI state corresponds to one piece of identification information, a target TCI state of the fourth signal includes one of the following:
a TCI state used by a channel in which RRC configuration signaling of the fourth signal is located;
a TCI state, among the plurality of TCI states, that is arranged at a preset location;
a TCI state, among the plurality of TCI states, that corresponds to preset identification information;
a TCI state associated with identification information associated with the fourth signal;
a TCI state that is indicated by third information and that is used for the fourth signal, where the third information is carried in DCI for activating the fourth signal;
a TCI state used by an SRS resource or an SRS resource set indicated by an SRI in DCI for activating the fourth signal;
a TCI state used by a PDCCH in which DCI for activating the fourth signal is located; or
a preset TCI state among TCI states used by a PDCCH in which DCI for activating the fourth signal is located, where
the fourth signal is configured for single-beam transmission.

Optionally, in a case that the first indication information is used for indicating a plurality of TCI states and each TCI state corresponds to one piece of identification information, a target TCI state of the fourth signal includes one of the following:
at least two of the plurality of TCI states;
a TCI state that is indicated by third information and that is used for the fourth signal, where the third information is carried in DCI for activating the fourth signal, and the number of TCI states indicated by the third information is greater than 1;
a TCI state used by SRS resources or SRS resource sets indicated by a plurality of SRIs in DCI for activating the fourth signal; or
a TCI state used by a PDCCH in which DCI for activating the fourth signal is located, where
the fourth signal is configured for multi-beam transmission.

Optionally, in a case that the first indication information is used for indicating one TCI state, a target TCI state of the fourth signal includes the TCI state; or
in a case that the first indication information is used for indicating one TCI state and the TCI state corresponds to the same identification information as the fourth signal or the TCI state is associated with the fourth signal, a target TCI state of the fourth signal includes the TCI state; or
in a case that the first indication information is used for indicating one TCI state and a TCI state indicated by third information is the TCI state, a target TCI state of the fourth signal includes the TCI state, where the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal includes the TCI state; or
in a case that the first indication information is used for indicating one TCI state, a target TCI state of the fourth signal includes a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal includes the TCI state.

Optionally, the apparatus further includes a third execution module, configured to: in a case that the fourth signal is configured for repetition or multi-beam simultaneous transmission, perform one of the following operations:
in a case that the fourth signal is configured for repetition, performing repetition by using the TCI state; or
updating, to the TCI state, a preset TCI state among TCI states used by current repetition or multi-beam simultaneous transmission.

Optionally, in a case that the first indication information is used for indicating a plurality of TCI states and each TCI state corresponds to one piece of identification information, a target TCI state of the fifth signal includes one of the following:
at least two of the plurality of TCI states;
a TCI state, among the plurality of TCI states, that is arranged at a preset location;
a TCI state, among the plurality of TCI states, that corresponds to preset identification information;
a TCI state associated with identification information associated with the fifth signal;
a TCI state that is indicated by fourth information and that is used for the fifth signal, where the fourth information is carried in configuration information of the fifth signal;
a TCI state that is indicated by fifth information and that is used for the fifth signal, where the fifth information is carried in DCI indicating the fifth signal, and the fifth signal is a PUCCH carrying aperiodic information;
a TCI state that is indicated by sixth information and that is used for the fifth signal, where the sixth information is used for activating or indicating a TCI state; or
a TCI state used by a second PDCCH, where the second PDCCH is a PDCCH indicating the PUCCH carrying aperiodic information.

Optionally, in a case that the first indication information is used for indicating one TCI state, a target TCI state of the fifth signal includes the TCI state; or
in a case that the first indication information is used for indicating one TCI state and the TCI state corresponds to the same identification information as the fifth signal or the TCI state is associated with the fifth signal, a target TCI state of the fifth signal includes the TCI state; or
in a case that the first indication information is used for indicating one TCI state and a TCI state indicated by fourth information is the TCI state, a target TCI state of the fifth signal includes the TCI state, where the fourth information is carried in configuration information of the fifth signal; or
in a case that the first indication information is used is for indicating one TCI state and a TCI state indicated by fifth information is the TCI state, a target TCI state of the fifth signal includes the TCI state, where the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal includes the TCI state, where the sixth information is used for activating or indicating a TCI state; or
in a case that the first indication information is used for indicating one TCI state, a TCI state used by a second PDCCH, where the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal includes the TCI state.

Optionally, the apparatus further includes a fourth execution module, configured to: in a case that the fifth signal is configured for repetition or multi-beam simultaneous transmission, perform one of the following operations:
in a case that the fifth signal is configured for repetition, performing repetition by using the TCI state; or
updating, to the TCI state, a preset TCI state among TCI states used by current repetition or multi-beam simultaneous transmission.

Optionally, M resource sets are configured, activated, or triggered on the network-side device, each of N resource sets among the M resource sets includes at least one resource group, each resource group includes at least one sixth signal resource, each of the M resource sets other than the N resource sets includes at least one sixth signal resource, M is a positive integer greater than 1, N is an integer greater than or equal to 0 and less than or equal to M, and in a case that the first indication information is used for indicating a plurality of TCI states and each TCI state corresponds to one piece of identification information, a TCI state used by the sixth signal meets one of the following:
the sixth signal in a target resource set uses a TCI state associated with the same identification information as the target resource set, where the target resource set is any one of the M resource sets;
the sixth signal in a target resource group uses a TCI state associated with the same identification information as the target resource group, where the target resource group is any one of resource groups included in the N resource sets;
the sixth signal uses a TCI state associated with the same identification information as the sixth signal resource;
the sixth signal in the target resource set uses a TCI state associated with the target resource set;
the sixth signal in the target resource group uses a TCI state associated with the target resource group;
the sixth signal uses a TCI state associated with the sixth signal resource;
the sixth signal uses a TCI state used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a Media Access Control control element MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

Optionally, M resource sets are configured, activated, or triggered on the network-side device, each of N resource sets among the M resource sets includes at least one resource group, each resource group includes at least one sixth signal resource, each of the M resource sets other than the N resource sets includes at least one sixth signal resource, M is a positive integer greater than 1, N is an integer greater than or equal to 0 and less than or equal to M, and in a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, where the target resource set is any one of the M resource sets;
in a case that the TCI state is associated with the same identification information as a target resource group, the sixth signal in the target resource group uses the TCI state, where the target resource group is any one of resource groups included in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, where the seventh information is carried in configuration information of the sixth signal;
in a case that a TCI state that is indicated by eighth information and that is used for the sixth signal is the TCI state, the sixth signal uses the TCI state, where the eighth information is carried in MAC CE signaling for activating the sixth signal;
in a case that a TCI state that is indicated by ninth information and that is used for the sixth signal is the TCI state, the sixth signal uses the TCI state, where the ninth information is carried in DCI for triggering the sixth signal;
in a case that a TCI state that is indicated by tenth information and that is used for the sixth signal is the TCI state, the sixth signal uses the TCI state, where the tenth information is used for activating or indicating a TCI state; or
the sixth signal uses a TCI state used by a PDCCH for triggering the sixth signal, where the sixth signal is an aperiodic signal.

Optionally, one resource set is configured, activated, or triggered on the network-side device; the resource set includes at least one resource group, and each resource group includes at least one sixth signal resource; or the resource set does not include a resource group, and the resource set includes at least one sixth signal resource; and in a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, where the target resource group is any one of resource groups included in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, where the sixth signal is an aperiodic signal;
the sixth signal uses a TCI state that is indicated by seventh information and that is used for the sixth signal, where the seventh information is carried in configuration information of the sixth signal;
the sixth signal uses a TCI state that is indicated by eighth information and that is used for the sixth signal, where the eighth information is carried in a MAC CE for activating the sixth signal;
the sixth signal uses a TCI state that is indicated by ninth information and that is used for the sixth signal, where the ninth information is carried in DCI for triggering the sixth signal; or
the sixth signal uses a TCI state that is indicated by tenth information and that is used for the sixth signal, where the tenth information is used for activating or indicating a TCI state.

Optionally, the first indication information is carried in target DCI, and the first indication information indicates a plurality of TCI states by indicating a first code point, or the first indication information indicates one TCI state by indicating a second code point, where a MAC CE for activating a TCI state includes the first code point and the second code point, and a TCI state corresponding to the first code point is one of the following:
a plurality of joint TCI states;
a plurality of pairs of TCI states, where each pair of TCI states includes a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
   a joint TCI state;
   a DL TCI state and a UL TCI state;
   a separate DL TCI state; or
   a separate UL TCI state.

Optionally, a MAC CE for activating a TCI state includes a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI includes one or more pieces of DCI, and the first indication information indicates a TCI state in at least one of the following manners:
   in a case that the DCI includes one indicator field and the indicator field indicates the third code point, the first indication information indicates one TCI state by using one piece of DCI;
   in a case that the DCI includes a plurality of indicator fields and each indicator field indicates one third code point, the first indication information indicates a plurality of TCI states by using one piece of DCI;
   in a case that the DCI includes a plurality of indicator fields and only one of the plurality of indicator fields is effective, the first indication information indicates one TCI state by using one piece of DCI; or
   in a case that the DCI includes a plurality of indicator fields and the plurality of indicator fields indicate a same third code point, the first indication information indicates one TCI state by using one piece of DCI.

Optionally, a target code point includes the first code point, the second code point, or the third code point, a TCI state corresponding to the target code point has an association relationship with identification information, and the association relationship is determined based on at least one of the following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

Optionally, in a case that the first indication information is used for indicating a plurality of TCI states and each TCI state corresponds to one piece of identification information, the target TCI state of the target signal includes: a TCI state, among the plurality of TCI states, that is indicated by third indication information and that is used for the target signal, where the third indication information is used for activating or indicating a TCI state.

Optionally, in a case that the first indication information is used for indicating one TCI state and third indication information indicates that the TCI state is used for the target signal, the target TCI state of the target signal includes the TCI state, where the third indication information is used for activating or indicating a TCI state.

Optionally, the identification information includes at least one of the following:
channel group identification information;
CORESET group identification information;
CORESET identification information;
PUCCH resource group identification information;
CORESET pool identifier;
PCI;
a TCI state identifier;
an identifier of an antenna panel of the terminal;
an identifier of a capability value of the terminal; or
an identifier of a capability value set of the terminal.

The second beam information determining apparatus 500 provided in this embodiment of this application is capable of implementing the processes implemented in the method embodiment of FIG. 3, with the same technical effect achieved. To avoid repetition, details are not described herein again.

The second beam information determining apparatus 500 in this embodiment of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in the embodiments of this application.

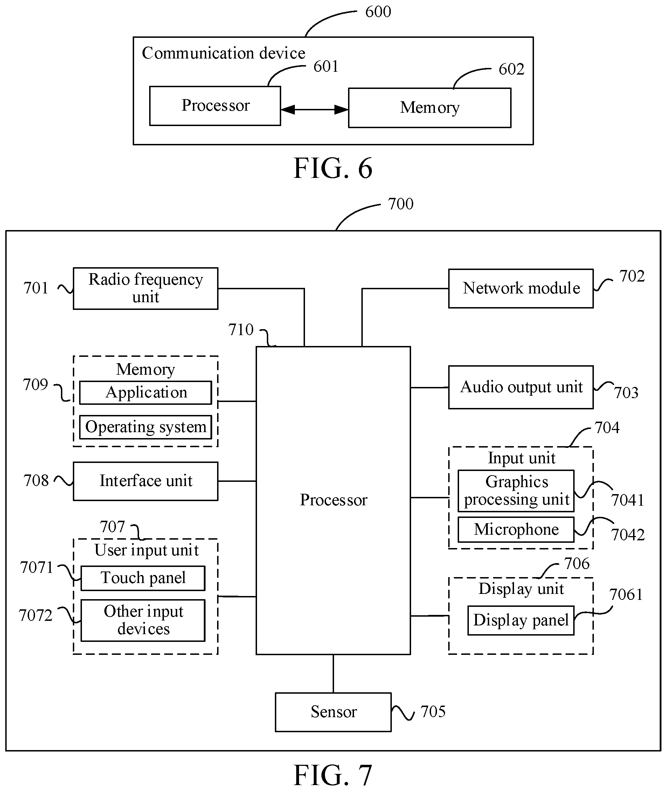

Optionally, as shown in FIG. 6, an embodiment of this application further provides a communication device 600, including a processor 601 and a memory 602. The memory 602 stores a program or instructions capable of running on the processor 601. For example, in a case that the communication device 600 is a terminal, when the program or instructions are executed by the processor 601, the steps in the embodiment of the beam information determining method shown in FIG. 2 are implemented, with the same technical effect achieved. In a case that the communication device 600 is a network-side device, when the program or instructions are executed by the processor 601, the steps in the embodiment of the beam information determining method shown in FIG. 3 are implemented, with the same technical effect achieved. To avoid repetition, details are not described herein again.

An embodiment of this application further provides a terminal, including a processor and a communication interface. The communication interface is configured to receive first indication information from a network-side device, where the first indication information is used for indicating at least one transmission configuration indicator TCI state. The processor is configured to determine a target TCI state of a target signal from the at least one TCI state in a case of determining to use a TCI state indicated by the first indication information for the target signal, where the target TCI state is used for determining common beam information of the target signal. The terminal embodiment corresponds to the foregoing terminal-side method embodiment, and all implementation processes and implementations of the foregoing method embodiment are applicable to the terminal embodiment, with the same technical effect achieved. Specifically, FIG. 7 is a schematic diagram of a hardware structure of a terminal for implementing embodiments of this application.

The terminal 700 includes but is not limited to at least some of the following components: a radio frequency unit 701, a network module 702, an audio output unit 703, an input unit 704, a sensor 705, a display unit 706, a user input unit 707, an interface unit 708, a memory 709, a processor 710, and the like.

A person skilled in the art can understand that the terminal 700 may further include a power supply (for example, a battery) that supplies power to each component. The power supply may be logically connected to the processor 710 through a power management system, so that functions such as charging management, discharging management, and power consumption management are implemented through the power management system. The terminal structure shown in FIG. 7 does not constitute a limitation on the terminal. The terminal may include more or fewer components than those shown in the figure, or some components may be combined, or different component arrangements may be used. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or an on/off button), a trackball, a mouse, and a joystick. Details are not described herein.

In this embodiment of this application, after receiving downlink data from a network-side device, the radio frequency unit 701 may transmit the downlink data to the processor 710 for processing. In addition, the radio frequency unit 701 may transmit uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may mainly include a first storage region for storing a program or instructions and a second storage region for storing data. The first storage region may store an operating system, an application or instructions required by at least one function (for example, an audio play function or an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 710.

The radio frequency unit 701 is configured to receive first indication information from a network-side device, where the first indication information is used for indicating at least one transmission configuration indicator TCI state.

The processor 710 is configured to determine a target TCI state of a target signal from the at least one TCI state in a case of determining to use a TCI state indicated by the first indication information for the target signal, where the target TCI state is used for determining common beam information of a plurality of channels.

The terminal 700 may implement the steps implemented by the terminal in the embodiment shown in FIG. 2. For details, refer to the descriptions in the embodiment shown in FIG. 2. Details are not described herein again.

An embodiment of this application further provides a network-side device, including a processor and a communication interface. The communication interface is configured to send first indication information, where the first indication information is used for indicating at least one transmission configuration indicator TCI state. The processor is configured to determine a target TCI state of a target signal from the at least one TCI state, where the target TCI state is used for determining common beam information of the target signal. The network-side device embodiment corresponds to the foregoing method embodiment for the network-side device, and all implementation processes and implementations of the foregoing method embodiment are applicable to the network-side device embodiment, with the same technical effect achieved.

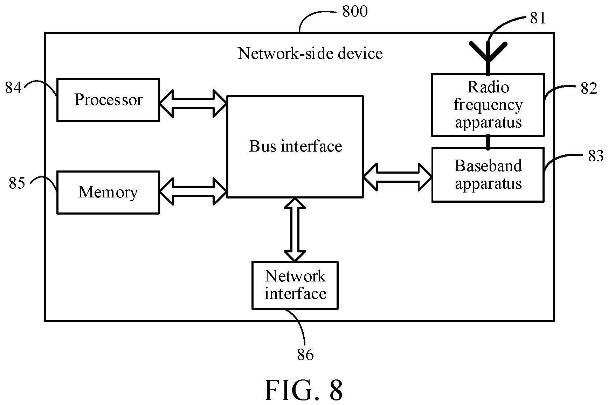

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information through the antenna 81.

The method performed by the network-side device in the foregoing embodiment may be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, the baseband processor, which is connected to the memory 85 through a bus interface, to invoke a program in the memory 85 to perform the operations of the network device shown in the foregoing method embodiments.

The network-side device may further include a network interface 86. The interface is, for example, a common public radio interface (common public radio interface, CPRI).

Specifically, the network-side device 800 in this embodiment of the present invention further includes instructions or a program stored in the memory 85 and capable of running on the processor 84, and the processor 84 invokes the instructions or program in the memory 85 to perform the method performed by the modules shown in FIG. 5, with the same technical effect achieved. To avoid repetition, details are not described herein again.

An embodiment of this application further provides a readable storage medium. The readable storage medium stores a program or instructions. When the program or instructions are executed by a processor, the processes in the embodiment of the beam information determining method shown in FIG. 2 or FIG. 3 are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the embodiment of the beam information determining method shown in FIG. 2 or FIG. 3, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiments of the beam information determining method, with the same technical effect achieved. To avoid repetition, details are not described herein again.

An embodiment of this application further provides a communication system, including a terminal and a network-side device. The terminal may be configured to perform the steps of the beam information determining method in the embodiment shown in FIG. 2. The network-side device may be configured to perform the steps of the beam information determining method in the embodiment shown in FIG. 3.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A beam information determining method, comprising:
receiving, by a terminal, first indication information from a network-side device, wherein the first indication information is used for indicating at least one transmission configuration indicator TCI state; and
determining, by the terminal, a target TCI state of a target signal from the at least one TCI state in a case that the terminal determines to use a TCI state indicated by the first indication information for the target signal, wherein the target TCI state is used for determining common beam information of the target signal.

2. The method according to claim 1, wherein the target signal comprises at least one of the following:
a first signal, wherein the first signal comprises a control channel related to a control resource set CORESET or a physical downlink shared channel PDSCH associated with the control channel;
a second signal, wherein the second signal comprises a semi-persistent scheduling SPS PDSCH;
a third signal, wherein the third signal comprises a configured grant CG type 1 physical uplink shared channel PUSCH;
a fourth signal, wherein the fourth signal comprises a CG type 2 PUSCH;
a fifth signal, wherein the fifth signal comprises a physical uplink control channel PUCCH carrying periodic information, or a PUCCH carrying aperiodic information; or
a sixth signal, wherein the sixth signal comprises a channel state information reference signal CSI-RS or a sounding reference signal SRS.

3. The method according to claim 2, wherein the first signal comprises at least one of the following:
a first control channel in a CORESET associated only with a common search space CSS, or a first control channel in a CORESET associated with a CSS other than a CSS type 3;
a PDSCH associated with the first control channel;
a second control channel in a CORESET associated with a CSS and a user equipment-specific search space USS other than a CORESET#0, or a second control channel in a CORESET associated with a USS and a CSS other than the CSS type 3;
a PDSCH associated with the second control channel;
a third control channel in the CORESET#0; or
a PDSCH associated with the third control channel.

4. The method according to claim 2 or 3, wherein in a case that the first indication information is used for indicating a plurality of TCI states and each TCI state corresponds to one piece of identification information, the target TCI state of the first signal comprises one of the following:
a TCI state, among the plurality of TCI states, that is arranged at a preset location;
a TCI state, among the plurality of TCI states, that corresponds to preset identification information;
a TCI state used by a channel in which the first indication information is located;
at least two of the plurality of TCI states, wherein the first signal is configured for repetition or multi-beam simultaneous transmission;
a first TCI state among the plurality of TCI states, wherein a quasi co-location type QCL-TypeD reference signal corresponding to the first TCI state and a synchronization signal block SSB associated with a serving cell physical cell identifier PCI meet QCL; or
a TCI state, among the plurality of TCI states, that is associated with identification information associated with a serving cell PCI.

5. The method according to claim 2 or 3, wherein in a case that the first indication information is used for indicating one TCI state, the target TCI state of the first signal comprises the TCI state indicated by the first indication information; or
in a case that the first indication information is used for indicating one TCI state and the TCI state corresponds to preset identification information, the target TCI state of the first signal comprises the TCI state; or
in a case that the first indication information is used for indicating one TCI state and the first signal is configured for repetition or multi-beam simultaneous transmission, the target TCI state of the first signal comprises the TCI state;
in a case that the first indication information is used for indicating one TCI state and a QCL-TypeD reference signal corresponding to the TCI state and an SSB associated with a serving cell PCI meet QCL, the target TCI state of the first signal comprises the TCI state; or
in a case that the first indication information is used for indicating one TCI state and the TCI state is associated with identification information associated with a serving cell PCI, the target TCI state of the first signal comprises the TCI state.

6. The method according to claim 5, wherein the method further comprises: in a case that the first signal is configured for repetition or multi-beam simultaneous transmission, performing, by the terminal, one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

7. The method according to claim 2, wherein the determining, by the terminal, a target TCI state of a target signal from the at least one TCI state in a case that the terminal determines to use a TCI state indicated by the first indication information for the target signal comprises:
determining, by the terminal based on second indication information or an agreement in a protocol, to use a TCI state indicated by the first indication information for the target signal, wherein the second indication information is used for indicating whether to use a TCI state indicated by the first indication information for the target signal, and the second indication information is sent by the network-side device; and
determining, by the terminal, the target TCI state of the target signal from the at least one TCI state.

8. The method according to claim 7, wherein the second indication information or the agreement in the protocol comprises one of the following:
a channel in which first radio resource control RRC signaling of the target signal is located is configured to use a TCI state indicated by the first indication information;
a CORESET in which a physical downlink control channel PDCCH associated with the second signal is located is configured to use a TCI state indicated by the first indication information;
a CORESET in which a PDCCH for scheduling the second signal is located is configured to use a TCI state indicated by the first indication information;
an SRS resource or an SRS resource set indicated by a sounding reference signal resource indicator SRI in configuration information of the third signal is configured to use a TCI state indicated by the first indication information;
an SRS resource or an SRS resource set indicated by an SRI in downlink control information DCI for activating the fourth signal is configured to use a TCI state indicated by the first indication information;
a CORESET in which DCI for activating the fourth signal is located is configured to use a TCI state indicated by the first indication information;
a CORESET in which a PDCCH associated with the fifth signal is located is configured to use a TCI state indicated by the first indication information;
a CORESET in which a PDCCH for scheduling the fifth signal is located is configured to use a TCI state indicated by the first indication information; or
a CORESET in which a PDCCH for triggering the sixth signal is located is configured to use a TCI state indicated by the first indication information.

9. The method according to claim 2, wherein a target TCI state of the second signal comprises one of the following:
a TCI state used by a CORESET in which a PDCCH associated with the second signal is located;
a TCI state used by a CORESET in which a PDCCH for scheduling the second signal is located;
a TCI state that is indicated by first information and that is used for the second signal, wherein the first information is carried in a PDCCH associated with the second signal, or the first information is carried in a PDCCH for scheduling the second signal, or the first information is carried in configuration information of the second signal;
a preset TCI state among a plurality of TCI states of a first PDCCH, wherein the first PDCCH is a PDCCH associated with the second signal or a PDCCH for scheduling the second signal, and the first PDCCH is configured for repetition or multi-beam simultaneous transmission;
a second TCI state among the at least one TCI state, wherein a QCL-TypeD reference signal corresponding to the second TCI state and an SSB associated with a serving cell PCI meet QCL; or
a TCI state, among the at least one TCI state, that is associated with identification information associated with a serving cell PCI.

10. The method according to claim 2, wherein in a case that the first indication information is used for indicating a plurality of TCI states and each TCI state corresponds to one piece of identification information, a target TCI state of the third signal comprises one of the following:
a TCI state used by a channel in which RRC configuration signaling of the third signal is located;
a TCI state, among the plurality of TCI states, that is arranged at a preset location;
a TCI state, among the plurality of TCI states, that corresponds to preset identification information;
a TCI state associated with identification information associated with the third signal;
a TCI state that is indicated by second information in configuration information of the third signal and that is used for the third signal; or
a TCI state used by an SRS resource or an SRS resource set indicated by an SRI in configuration information of the third signal, wherein
the third signal is configured for single-beam transmission.

11. The method according to claim 2, wherein in a case that the first indication information is used for indicating a plurality of TCI states and each TCI state corresponds to one piece of identification information, a target TCI state of the third signal comprises one of the following:
at least two of the plurality of TCI states;
a TCI state that is indicated by second information in configuration information of the third signal and that is used for the third signal, wherein the number of TCI states indicated by the second information is greater than 1; or
a TCI state used by SRS resources or SRS resource sets indicated by a plurality of SRIs in configuration information of the third signal, wherein
the third signal is configured for multi-beam transmission.

12. The method according to claim 2, wherein in a case that the first indication information is used for indicating one TCI state, a target TCI state of the third signal comprises the TCI state; or
in a case that the first indication information is used for indicating one TCI state and the TCI state corresponds to the same identification information as the third signal or the TCI state is associated with the third signal, a target TCI state of the third signal comprises the TCI state; or
in a case that the first indication information is used for indicating one TCI state and a TCI state indicated by second information is the TCI state, a target TCI state of the third signal comprises the TCI state, wherein the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal comprises the TCI state; or
in a case that the first indication information is used for indicating one TCI state and the third signal is configured for repetition or multi-beam simultaneous transmission, a target TCI state of the third signal comprises the TCI state.

13. The method according to claim 12, wherein the method further comprises: in a case that the third signal is configured for repetition or multi-beam simultaneous transmission, performing, by the terminal, one of the following operations:
in a case that the third signal is configured for repetition, performing repetition by using the TCI state; or
updating, to the TCI state, a preset TCI state among TCI states used by current repetition or multi-beam simultaneous transmission.

14. The method according to claim 2, wherein in a case that the first indication information is used for indicating a plurality of TCI states and each TCI state corresponds to one piece of identification information, a target TCI state of the fourth signal comprises one of the following:
a TCI state used by a channel in which RRC configuration signaling of the fourth signal is located;
a TCI state, among the plurality of TCI states, that is arranged at a preset location;
a TCI state, among the plurality of TCI states, that corresponds to preset identification information;
a TCI state associated with identification information associated with the fourth signal;
a TCI state that is indicated by third information and that is used for the fourth signal, wherein the third information is carried in DCI for activating the fourth signal;
a TCI state used by an SRS resource or an SRS resource set indicated by an SRI in DCI for activating the fourth signal;
a TCI state used by a PDCCH in which DCI for activating the fourth signal is located; or
a preset TCI state among TCI states used by a PDCCH in which DCI for activating the fourth signal is located, wherein
the fourth signal is configured for single-beam transmission.

15. The method according to claim 2, wherein in a case that the first indication information is used for indicating a plurality of TCI states and each TCI state corresponds to one piece of identification information, a target TCI state of the fourth signal comprises one of the following:
at least two of the plurality of TCI states;
a TCI state that is indicated by third information and that is used for the fourth signal, wherein the third information is carried in DCI for activating the fourth signal, and the number of TCI states indicated by the third information is greater than 1;
a TCI state used by SRS resources or SRS resource sets indicated by a plurality of SRIs in DCI for activating the fourth signal; or
a TCI state used by a PDCCH in which DCI for activating the fourth signal is located, wherein
the fourth signal is configured for multi-beam transmission.

16. The method according to claim 2, wherein in a case that the first indication information is used for indicating one TCI state, a target TCI state of the fourth signal comprises the TCI state; or
in a case that the first indication information is used for indicating one TCI state and the TCI state corresponds to the same identification information as the fourth signal or the TCI state is associated with the fourth signal, a target TCI state of the fourth signal comprises the TCI state; or
in a case that the first indication information is used for indicating one TCI state and a TCI state indicated by third information is the TCI state, a target TCI state of the fourth signal comprises the TCI state, wherein the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal comprises the TCI state; or
in a case that the first indication information is used for indicating one TCI state, a target TCI state of the fourth signal comprises a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal comprises the TCI state.

17. The method according to claim 2, wherein the method further comprises: in a case that the fourth signal is configured for repetition or multi-beam simultaneous transmission, performing, by the terminal, one of the following operations:
in a case that the fourth signal is configured for repetition, performing repetition by using the TCI state; or
updating, to the TCI state, a preset TCI state among TCI states used by current repetition or multi-beam simultaneous transmission.

18. The method according to claim 2, wherein in a case that the first indication information is used for indicating a plurality of TCI states and each TCI state corresponds to one piece of identification information, a target TCI state of the fifth signal comprises one of the following:
at least two of the plurality of TCI states;
a TCI state, among the plurality of TCI states, that is arranged at a preset location;
a TCI state, among the plurality of TCI states, that corresponds to preset identification information;
a TCI state associated with identification information associated with the fifth signal;
a TCI state that is indicated by fourth information and that is used for the fifth signal, wherein the fourth information is carried in configuration information of the fifth signal;
a TCI state that is indicated by fifth information and that is used for the fifth signal, wherein the fifth information is carried in DCI indicating the fifth signal, and the fifth signal is a PUCCH carrying aperiodic information;
a TCI state that is indicated by sixth information and that is used for the fifth signal, wherein the sixth information is used for activating or indicating a TCI state; or
a TCI state used by a second PDCCH, wherein the second PDCCH is a PDCCH indicating the PUCCH carrying aperiodic information.

19. The method according to claim 2, wherein in a case that the first indication information is used for indicating one TCI state, a target TCI state of the fifth signal comprises the TCI state; or
in a case that the first indication information is used for indicating one TCI state and the TCI state corresponds to the same identification information as the fifth signal or the TCI state is associated with the fifth signal, a target TCI state of the fifth signal comprises the TCI state; or
in a case that the first indication information is used for indicating one TCI state and a TCI state indicated by fourth information is the TCI state, a target TCI state of the fifth signal comprises the TCI state, wherein the fourth information is carried in configuration information of the fifth signal; or
in a case that the first indication information is used is for indicating one TCI state and a TCI state indicated by fifth information is the TCI state, a target TCI state of the fifth signal comprises the TCI state, wherein the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal comprises the TCI state, wherein the sixth information is used for activating or indicating a TCI state; or
in a case that the first indication information is used for indicating one TCI state, a TCI state used by a second PDCCH, wherein the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal comprises the TCI state.

20. The method according to claim 19, wherein the method further comprises: in a case that the fifth signal is configured for repetition or multi-beam simultaneous transmission, performing, by the terminal, one of the following operations:
in a case that the fifth signal is configured for repetition, performing repetition by using the TCI state; or
updating, to the TCI state, a preset TCI state among TCI states used by current repetition or multi-beam simultaneous transmission.

21. The method according to claim 2, wherein M resource sets are configured, activated, or triggered on the network-side device, each of N resource sets among the M resource sets comprises at least one resource group, each resource group comprises at least one sixth signal resource, each of the M resource sets other than the N resource sets comprises at least one sixth signal resource, M is a positive integer greater than 1, N is an integer greater than or equal to 0 and less than or equal to M, and in a case that the first indication information is used for indicating a plurality of TCI states and each TCI state corresponds to one piece of identification information, a TCI state used by the sixth signal meets one of the following:
the sixth signal in a target resource set uses a TCI state associated with the same identification information as the target resource set, wherein the target resource set is any one of the M resource sets;
the sixth signal in a target resource group uses a TCI state associated with the same identification information as the target resource group, wherein the target resource group is any one of resource groups comprised in the N resource sets;
the sixth signal uses a TCI state associated with the same identification information as the sixth signal resource;
the sixth signal in the target resource set uses a TCI state associated with the target resource set;
the sixth signal in the target resource group uses a TCI state associated with the target resource group;
the sixth signal uses a TCI state associated with the sixth signal resource;
the sixth signal uses a TCI state used by a PDCCH for triggering the sixth signal, wherein the sixth signal is an aperiodic signal;
the sixth signal uses a TCI state that is indicated by seventh information and that is used for the sixth signal, wherein the seventh information is carried in configuration information of the sixth signal;
the sixth signal uses a TCI state that is indicated by eighth information and that is used for the sixth signal, wherein the eighth information is carried in a Media Access Control control element MAC CE for activating the sixth signal;
the sixth signal uses a TCI state that is indicated by ninth information and that is used for the sixth signal, wherein the ninth information is carried in DCI for triggering the sixth signal; or
the sixth signal uses a TCI state that is indicated by tenth information and that is used for the sixth signal, wherein the tenth information is used for activating or indicating a TCI state.

22. The method according to claim 2, wherein M resource sets are configured, activated, or triggered on the network-side device, each of N resource sets among the M resource sets comprises at least one resource group, each resource group comprises at least one sixth signal resource, each of the M resource sets other than the N resource sets comprises at least one sixth signal resource, M is a positive integer greater than 1, N is an integer greater than or equal to 0 and less than or equal to M, and in a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, wherein the target resource set is any one of the M resource sets;
in a case that the TCI state is associated with the same identification information as a target resource group, the sixth signal in the target resource group uses the TCI state, wherein the target resource group is any one of resource groups comprised in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, wherein the seventh information is carried in configuration information of the sixth signal;
in a case that a TCI state that is indicated by eighth information and that is used for the sixth signal is the TCI state, the sixth signal uses the TCI state, wherein the eighth information is carried in MAC CE signaling for activating the sixth signal;
in a case that a TCI state that is indicated by ninth information and that is used for the sixth signal is the TCI state, the sixth signal uses the TCI state, wherein the ninth information is carried in DCI for triggering the sixth signal;
in a case that a TCI state that is indicated by tenth information and that is used for the sixth signal is the TCI state, the sixth signal uses the TCI state, wherein the tenth information is used for activating or indicating a TCI state; or
the sixth signal uses a TCI state used by a PDCCH for triggering the sixth signal, wherein the sixth signal is an aperiodic signal.

23. The method according to claim 2, wherein one resource set is configured, activated, or triggered on the network-side device; the resource set comprises at least one resource group, and each resource group comprises at least one sixth signal resource; or the resource set does not comprise a resource group, and the resource set comprises at least one sixth signal resource; and in a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, wherein the target resource group is any one of resource groups comprised in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, wherein the sixth signal is an aperiodic signal;
the sixth signal uses a TCI state that is indicated by seventh information and that is used for the sixth signal, wherein the seventh information is carried in configuration information of the sixth signal;
the sixth signal uses a TCI state that is indicated by eighth information and that is used for the sixth signal, wherein the eighth information is carried in a MAC CE for activating the sixth signal;
the sixth signal uses a TCI state that is indicated by ninth information and that is used for the sixth signal, wherein the ninth information is carried in DCI for triggering the sixth signal; or
the sixth signal uses a TCI state that is indicated by tenth information and that is used for the sixth signal, wherein the tenth information is used for activating or indicating a TCI state.

24. The method according to claim 1, wherein the first indication information is carried in target DCI, and the first indication information indicates a plurality of TCI states by indicating a first code point, or the first indication information indicates one TCI state by indicating a second code point, wherein a MAC CE for activating a TCI state comprises the first code point and the second code point, and a TCI state corresponding to the first code point is one of the following:
a plurality of joint TCI states;
a plurality of pairs of TCI states, wherein each pair of TCI states comprises a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
a joint TCI state;
a DL TCI state and a UL TCI state;
a separate DL TCI state; or
a separate UL TCI state.

25. The method according to claim 1, wherein a MAC CE for activating a TCI state comprises a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI comprises one or more pieces of DCI, and the first indication information indicates a TCI state in at least one of the following manners:
in a case that the DCI comprises one indicator field and the indicator field indicates the third code point, the first indication information indicates one TCI state by using one piece of DCI;
in a case that the DCI comprises a plurality of indicator fields and each indicator field indicates one third code point, the first indication information indicates a plurality of TCI states by using one piece of DCI;
in a case that the DCI comprises a plurality of indicator fields and only one of the plurality of indicator fields is effective, the first indication information indicates one TCI state by using one piece of DCI; or
in a case that the DCI comprises a plurality of indicator fields and the plurality of indicator fields indicate a same third code point, the first indication information indicates one TCI state by using one piece of DCI.

26. The method according to claim 24 or 25, wherein a target code point comprises the first code point, the second code point, or the third code point, a TCI state corresponding to the target code point has an association relationship with identification information, and the association relationship is determined based on at least one of the following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

27. The method according to claim 1, wherein in a case that the first indication information is used for indicating a plurality of TCI states and each TCI state corresponds to one piece of identification information, the target TCI state of the target signal comprises: a TCI state, among the plurality of TCI states, that is indicated by third indication information and that is used for the target signal, wherein the third indication information is used for activating or indicating a TCI state.

28. The method according to claim 1, wherein in a case that the first indication information is used for indicating one TCI state and third indication information indicates that the TCI state is used for the target signal, the target TCI state of the target signal comprises the TCI state, wherein the third indication information is used for activating or indicating a TCI state.

29. The method according to claim 4, wherein the identification information comprises at least one of the following:
channel group identification information;
CORESET group identification information;
CORESET identification information;
PUCCH resource group identification information;
CORESET pool identifier;
PCI;
a TCI state identifier;
an identifier of an antenna panel of the terminal;
an identifier of a capability value of the terminal; or
an identifier of a capability value set of the terminal.

30. A beam information determining method, comprising:
sending, by a network-side device, first indication information, wherein the first indication information is used for indicating at least one transmission configuration indicator TCI state; and
determining, by the network-side device, a target TCI state of a target signal from the at least one TCI state, wherein the target TCI state is used for determining common beam information of the target signal.

31. The method according to claim 30, wherein the target signal comprises at least one of the following:
a first signal, wherein the first signal comprises a control channel related to a control resource set CORESET or a physical downlink shared channel PDSCH associated with the control channel;
a second signal, wherein the second signal comprises a semi-persistent scheduling SPS PDSCH;
a third signal, wherein the third signal comprises a configured grant CG type 1 physical uplink shared channel PUSCH;
a fourth signal, wherein the fourth signal comprises a CG type 2 PUSCH;
a fifth signal, wherein the fifth signal comprises a physical uplink control channel PUCCH carrying periodic information, or a PUCCH carrying aperiodic information; or
a sixth signal, wherein the sixth signal comprises a channel state information reference signal CSI-RS or a sounding reference signal SRS.

32. The method according to claim 31, wherein the first signal comprises at least one of the following:
a first control channel in a CORESET associated only with a common search space CSS, or a first control channel in a CORESET associated with a CSS other than a CSS type 3;
a PDSCH associated with the first control channel;
a second control channel in a CORESET associated with a CSS and a user equipment-specific search space USS other than a CORESET#0, or a second control channel in a CORESET associated with a USS and a CSS other than the CSS type 3;
a PDSCH associated with the second control channel;
a third control channel in the CORESET#0; or
a PDSCH associated with the third control channel.

33. The method according to claim 31 or 32, wherein in a case that the first indication information is used for indicating a plurality of TCI states and each TCI state corresponds to one piece of identification information, the target TCI state of the first signal comprises one of the following:
a TCI state, among the plurality of TCI states, that is arranged at a preset location;
a TCI state, among the plurality of TCI states, that corresponds to preset identification information;
a TCI state used by a channel in which the first indication information is located;
at least two of the plurality of TCI states, wherein the first signal is configured for repetition or multi-beam simultaneous transmission;
a first TCI state among the plurality of TCI states, wherein a quasi co-location type QCL-TypeD reference signal corresponding to the first TCI state and a synchronization signal block SSB associated with a serving cell physical cell identifier PCI meet QCL; or
a TCI state, among the plurality of TCI states, that is associated with identification information associated with a serving cell PCI.

34. The method according to claim 31 or 32, wherein in a case that the first indication information is used for indicating one TCI state, the target TCI state of the first signal comprises the TCI state indicated by the first indication information; or
in a case that the first indication information is used for indicating one TCI state and the TCI state corresponds to preset identification information, the target TCI state of the first signal comprises the TCI state; or
in a case that the first indication information is used for indicating one TCI state and the first signal is configured for repetition or multi-beam simultaneous transmission, the target TCI state of the first signal comprises the TCI state;
in a case that the first indication information is used for indicating one TCI state and a QCL-TypeD reference signal corresponding to the TCI state and an SSB associated with a serving cell PCI meet QCL, the target TCI state of the first signal comprises the TCI state; or
in a case that the first indication information is used for indicating one TCI state and the TCI state is associated with identification information associated with a serving cell PCI, the target TCI state of the first signal comprises the TCI state.

35. The method according to claim 34, wherein the method further comprises: in a case that the first signal is configured for repetition or multi-beam simultaneous transmission, performing, by the network-side device, one of the following operations:
stopping the repetition or the multi-beam simultaneous transmission;
in a case that the first signal is configured for repetition, performing repetition by using the TCI state; or
updating, to the TCI state, a preset TCI state among TCI states used by current repetition or multi-beam simultaneous transmission.

36. The method according to claim 31, wherein before the determining, by the network-side device, a target TCI state of a target signal from the at least one TCI state, the method further comprises:
determining, by the network-side device based on second indication information or an agreement in a protocol, to use a TCI state indicated by the first indication information for the target signal, wherein the second indication information is used for indicating whether to use a TCI state indicated by the first indication information for the target signal.

37. The method according to claim 36, wherein the second indication information or the agreement in the protocol comprises one of the following:
a channel in which first radio resource control RRC signaling of the target signal is located is configured to use a TCI state indicated by the first indication information;
a CORESET in which a physical downlink control channel PDCCH associated with the second signal is located is configured to use a TCI state indicated by the first indication information;
a CORESET in which a PDCCH for scheduling the second signal is located is configured to use a TCI state indicated by the first indication information;
an SRS resource or an SRS resource set indicated by a sounding reference signal resource indicator SRI in configuration information of the third signal is configured to use a TCI state indicated by the first indication information;
an SRS resource or an SRS resource set indicated by an SRI in downlink control information DCI for activating the fourth signal is configured to use a TCI state indicated by the first indication information;
a CORESET in which DCI for activating the fourth signal is located is configured to use a TCI state indicated by the first indication information;
a CORESET in which a PDCCH associated with the fifth signal is located is configured to use a TCI state indicated by the first indication information;
a CORESET in which a PDCCH for scheduling the fifth signal is located is configured to use a TCI state indicated by the first indication information; or
a CORESET in which a PDCCH for triggering the sixth signal is located is configured to use a TCI state indicated by the first indication information.

38. The method according to claim 31, wherein a target TCI state of the second signal comprises one of the following:
a TCI state used by a CORESET in which a PDCCH associated with the second signal is located;
a TCI state used by a CORESET in which a PDCCH for scheduling the second signal is located;
a TCI state that is indicated by first information and that is used for the second signal, wherein the first information is carried in a PDCCH associated with the second signal, or the first information is carried in a PDCCH for scheduling the second signal, or the first information is carried in configuration information of the second signal;
a preset TCI state among a plurality of TCI states of a first PDCCH, wherein the first PDCCH is a PDCCH associated with the second signal or a PDCCH for scheduling the second signal, and the first PDCCH is configured for repetition or multi-beam simultaneous transmission;
a second TCI state among the at least one TCI state, wherein a QCL-TypeD reference signal corresponding to the second TCI state and an SSB associated with a serving cell PCI meet QCL; or
a TCI state, among the at least one TCI state, that is associated with identification information associated with a serving cell PCI.

39. The method according to claim 31, wherein in a case that the first indication information is used for indicating a plurality of TCI states and each TCI state corresponds to one piece of identification information, a target TCI state of the third signal comprises one of the following:
a TCI state used by a channel in which RRC configuration signaling of the third signal is located;
a TCI state, among the plurality of TCI states, that is arranged at a preset location;
a TCI state, among the plurality of TCI states, that corresponds to preset identification information;
a TCI state associated with identification information associated with the third signal;
a TCI state that is indicated by second information in configuration information of the third signal and that is used for the third signal; or
a TCI state used by an SRS resource or an SRS resource set indicated by an SRI in configuration information of the third signal, wherein
the third signal is configured for single-beam transmission.

40. The method according to claim 31, wherein in a case that the first indication information is used for indicating a plurality of TCI states and each TCI state corresponds to one piece of identification information, a target TCI state of the third signal comprises one of the following:
at least two of the plurality of TCI states;
a TCI state that is indicated by second information in configuration information of the third signal and that is used for the third signal, wherein the number of TCI states indicated by the second information is greater than 1; or
a TCI state used by SRS resources or SRS resource sets indicated by a plurality of SRIs in configuration information of the third signal, wherein
the third signal is configured for multi-beam transmission.

41. The method according to claim 31, wherein in a case that the first indication information is used for indicating one TCI state, a target TCI state of the third signal comprises the TCI state; or
in a case that the first indication information is used for indicating one TCI state and the TCI state corresponds to the same identification information as the third signal or the TCI state is associated with the third signal, a target TCI state of the third signal comprises the TCI state; or
in a case that the first indication information is used for indicating one TCI state and a TCI state indicated by second information is the TCI state, a target TCI state of the third signal comprises the TCI state, wherein the second information is carried in configuration information of the third signal; or
in a case that the first indication information is used for indicating one TCI state and a TCI state used by an SRS resource or an SRS resource set indicated by an SRI in configuration information of the third signal is the TCI state, a target TCI state of the third signal comprises the TCI state; or
in a case that the first indication information is used for indicating one TCI state and the third signal is configured for repetition or multi-beam simultaneous transmission, a target TCI state of the third signal comprises the TCI state.

42. The method according to claim 41, wherein the method further comprises: in a case that the third signal is configured for repetition or multi-beam simultaneous transmission, performing, by the network-side device, one of the following operations:
in a case that the third signal is configured for repetition, performing repetition by using the TCI state; or
updating, to the TCI state, a preset TCI state among TCI states used by current repetition or multi-beam simultaneous transmission.

43. The method according to claim 31, wherein in a case that the first indication information is used for indicating a plurality of TCI states and each TCI state corresponds to one piece of identification information, a target TCI state of the fourth signal comprises one of the following:
a TCI state used by a channel in which RRC configuration signaling of the fourth signal is located;
a TCI state, among the plurality of TCI states, that is arranged at a preset location;
a TCI state, among the plurality of TCI states, that corresponds to preset identification information;
a TCI state associated with identification information associated with the fourth signal;
a TCI state that is indicated by third information and that is used for the fourth signal, wherein the third information is carried in DCI for activating the fourth signal;
a TCI state used by an SRS resource or an SRS resource set indicated by an SRI in DCI for activating the fourth signal;
a TCI state used by a PDCCH in which DCI for activating the fourth signal is located; or
a preset TCI state among TCI states used by a PDCCH in which DCI for activating the fourth signal is located, wherein
the fourth signal is configured for single-beam transmission.

44. The method according to claim 31, wherein in a case that the first indication information is used for indicating a plurality of TCI states and each TCI state corresponds to one piece of identification information, a target TCI state of the fourth signal comprises one of the following:
at least two of the plurality of TCI states;
a TCI state that is indicated by third information and that is used for the fourth signal, wherein the third information is carried in DCI for activating the fourth signal, and the number of TCI states indicated by the third information is greater than 1;
a TCI state used by SRS resources or SRS resource sets indicated by a plurality of SRIs in DCI for activating the fourth signal; or
a TCI state used by a PDCCH in which DCI for activating the fourth signal is located, wherein
the fourth signal is configured for multi-beam transmission.

45. The method according to claim 31, wherein in a case that the first indication information is used for indicating one TCI state, a target TCI state of the fourth signal comprises the TCI state; or
in a case that the first indication information is used for indicating one TCI state and the TCI state corresponds to the same identification information as the fourth signal or the TCI state is associated with the fourth signal, a target TCI state of the fourth signal comprises the TCI state; or
in a case that the first indication information is used for indicating one TCI state and a TCI state indicated by third information is the TCI state, a target TCI state of the fourth signal comprises the TCI state, wherein the third information is carried in DCI for activating the fourth signal; or
in a case that the first indication information is used for indicating one TCI state and a TCI state used by an SRS resource or an SRS resource set indicated by an SRI in DCI for activating the fourth signal is the TCI state, a target TCI state of the fourth signal comprises the TCI state; or
in a case that the first indication information is used for indicating one TCI state, a target TCI state of the fourth signal comprises a TCI state used by a PDCCH in which DCI for activating the fourth signal is located; or
in a case that the first indication information is used for indicating one TCI state and the fourth signal is configured for repetition or multi-beam simultaneous transmission, a target TCI state of the fourth signal comprises the TCI state.

46. The method according to claim 31, wherein the method further comprises: in a case that the fourth signal is configured for repetition or multi-beam simultaneous transmission, performing, by the network-side device, one of the following operations:
in a case that the fourth signal is configured for repetition, performing repetition by using the TCI state; or
updating, to the TCI state, a preset TCI state among TCI states used by current repetition or multi-beam simultaneous transmission.

47. The method according to claim 31, wherein in a case that the first indication information is used for indicating a plurality of TCI states and each TCI state corresponds to one piece of identification information, a target TCI state of the fifth signal comprises one of the following:
at least two of the plurality of TCI states;
a TCI state, among the plurality of TCI states, that is arranged at a preset location;
a TCI state, among the plurality of TCI states, that corresponds to preset identification information;
a TCI state associated with identification information associated with the fifth signal;
a TCI state that is indicated by fourth information and that is used for the fifth signal, wherein the fourth information is carried in configuration information of the fifth signal;
a TCI state that is indicated by fifth information and that is used for the fifth signal, wherein the fifth information is carried in DCI indicating the fifth signal, and the fifth signal is a PUCCH carrying aperiodic information;
a TCI state that is indicated by sixth information and that is used for the fifth signal, wherein the sixth information is used for activating or indicating a TCI state; or
a TCI state used by a second PDCCH, wherein the second PDCCH is a PDCCH indicating the PUCCH carrying aperiodic information.

48. The method according to claim 31, wherein in a case that the first indication information is used for indicating one TCI state, a target TCI state of the fifth signal comprises the TCI state; or
in a case that the first indication information is used for indicating one TCI state and the TCI state corresponds to the same identification information as the fifth signal or the TCI state is associated with the fifth signal, a target TCI state of the fifth signal comprises the TCI state; or
in a case that the first indication information is used for indicating one TCI state and a TCI state indicated by fourth information is the TCI state, a target TCI state of the fifth signal comprises the TCI state, wherein the fourth information is carried in configuration information of the fifth signal; or
in a case that the first indication information is used is for indicating one TCI state and a TCI state indicated by fifth information is the TCI state, a target TCI state of the fifth signal comprises the TCI state, wherein the fifth information is carried in DCI indicating the fifth signal, and the fifth signal is a PUCCH carrying aperiodic information; or
in a case that the first indication information is used for indicating one TCI state and sixth information indicates that the TCI state is used for the fifth signal, a target TCI state of the fifth signal comprises the TCI state, wherein the sixth information is used for activating or indicating a TCI state; or
in a case that the first indication information is used for indicating one TCI state, a TCI state used by a second PDCCH, wherein the second PDCCH is a PDCCH indicating the PUCCH carrying aperiodic information; or
in a case that the first indication information is used for indicating one TCI state and the fifth signal is configured for repetition or multi-beam simultaneous transmission, a target TCI state of the fifth signal comprises the TCI state.

49. The method according to claim 48, wherein the method further comprises: in a case that the fifth signal is configured for repetition or multi-beam simultaneous transmission, performing, by the network-side device, one of the following operations:
in a case that the fifth signal is configured for repetition, performing repetition by using the TCI state; or
updating, to the TCI state, a preset TCI state among TCI states used by current repetition or multi-beam simultaneous transmission.

50. The method according to claim 31, wherein M resource sets are configured, activated, or triggered on the network-side device, each of N resource sets among the M resource sets comprises at least one resource group, each resource group comprises at least one sixth signal resource, each of the M resource sets other than the N resource sets comprises at least one sixth signal resource, M is a positive integer greater than 1, N is an integer greater than or equal to 0 and less than or equal to M, and in a case that the first indication information is used for indicating a plurality of TCI states and each TCI state corresponds to one piece of identification information, a TCI state used by the sixth signal meets one of the following:
the sixth signal in a target resource set uses a TCI state associated with the same identification information as the target resource set, wherein the target resource set is any one of the M resource sets;
the sixth signal in a target resource group uses a TCI state associated with the same identification information as the target resource group, wherein the target resource group is any one of resource groups comprised in the N resource sets;
the sixth signal uses a TCI state associated with the same identification information as the sixth signal resource;
the sixth signal in the target resource set uses a TCI state associated with the target resource set;
the sixth signal in the target resource group uses a TCI state associated with the target resource group;
the sixth signal uses a TCI state associated with the sixth signal resource;
the sixth signal uses a TCI state used by a PDCCH for triggering the sixth signal, wherein the sixth signal is an aperiodic signal;
the sixth signal uses a TCI state that is indicated by seventh information and that is used for the sixth signal, wherein the seventh information is carried in configuration information of the sixth signal;
the sixth signal uses a TCI state that is indicated by eighth information and that is used for the sixth signal, wherein the eighth information is carried in a Media Access Control control element MAC CE for activating the sixth signal;
the sixth signal uses a TCI state that is indicated by ninth information and that is used for the sixth signal, wherein the ninth information is carried in DCI for triggering the sixth signal; or
the sixth signal uses a TCI state that is indicated by tenth information and that is used for the sixth signal, wherein the tenth information is used for activating or indicating a TCI state.

51. The method according to claim 31, wherein M resource sets are configured, activated, or triggered on the network-side device, each of N resource sets among the M resource sets comprises at least one resource group, each resource group comprises at least one sixth signal resource, each of the M resource sets other than the N resource sets comprises at least one sixth signal resource, M is a positive integer greater than 1, N is an integer greater than or equal to 0 and less than or equal to M, and in a case that the first indication information is used for indicating one TCI state, a TCI state used by the sixth signal meets one of the following:
the sixth signal uses the TCI state;
in a case that the TCI state is associated with the same identification information as a target resource set, the sixth signal in the target resource set uses the TCI state, wherein the target resource set is any one of the M resource sets;
in a case that the TCI state is associated with the same identification information as a target resource group, the sixth signal in the target resource group uses the TCI state, wherein the target resource group is any one of resource groups comprised in the N resource sets;
in a case that the TCI state is associated with the same identification information as the sixth signal resource, the sixth signal uses the TCI state;
in a case that the TCI state is associated with the target resource set, the sixth signal in the target resource set uses the TCI state;
in a case that the TCI state is associated with the target resource group, the sixth signal in the target resource group uses the TCI state;
in a case that the TCI state is associated with the sixth signal resource, the sixth signal uses the TCI state;
in a case that a TCI state that is indicated by seventh information and that is used for the sixth signal is the TCI state, the sixth signal uses the TCI state, wherein the seventh information is carried in configuration information of the sixth signal;
in a case that a TCI state that is indicated by eighth information and that is used for the sixth signal is the TCI state, the sixth signal uses the TCI state, wherein the eighth information is carried in MAC CE signaling for activating the sixth signal;
in a case that a TCI state that is indicated by ninth information and that is used for the sixth signal is the TCI state, the sixth signal uses the TCI state, wherein the ninth information is carried in DCI for triggering the sixth signal;
in a case that a TCI state that is indicated by tenth information and that is used for the sixth signal is the TCI state, the sixth signal uses the TCI state, wherein the tenth information is used for activating or indicating a TCI state; or
the sixth signal uses a TCI state used by a PDCCH for triggering the sixth signal, wherein the sixth signal is an aperiodic signal.

52. The method according to claim 31, wherein one resource set is configured, activated, or triggered on the network-side device; the resource set comprises at least one resource group, and each resource group comprises at least one sixth signal resource; or the resource set does not comprise a resource group, and the resource set comprises at least one sixth signal resource; and in a case that the first indication information is used for indicating a plurality of TCI states, a TCI state used by the sixth signal meets one of the following:
the sixth signal uses a TCI state, among the plurality of TCI states, that is arranged at a preset location;
the sixth signal uses a TCI state, among the plurality of TCI states, that corresponds to preset identification information;
the sixth signal in the resource set uses a TCI state, among the plurality of TCI states, that is associated with the same identification information as the resource set;
the sixth signal in a target resource group uses a TCI state, among the plurality of TCI states, that is associated with the same identification information as the target resource group, wherein the target resource group is any one of resource groups comprised in the resource set;
the sixth signal uses a TCI state, among the plurality of TCI states, that is associated with the same identification information as the sixth signal resource;
the sixth signal in the resource set uses a TCI state, among the plurality of TCI states, that is associated with the resource set;
the sixth signal in the target resource group uses a TCI state, among the plurality of TCI states, that is associated with the target resource group;
the sixth signal uses a TCI state, among the plurality of TCI states, that is associated with the sixth signal resource;
the sixth signal uses a TCI state, among the plurality of TCI states, that is used by a PDCCH for triggering the sixth signal, wherein the sixth signal is an aperiodic signal;
the sixth signal uses a TCI state that is indicated by seventh information and that is used for the sixth signal, wherein the seventh information is carried in configuration information of the sixth signal;
the sixth signal uses a TCI state that is indicated by eighth information and that is used for the sixth signal, wherein the eighth information is carried in a MAC CE for activating the sixth signal;
the sixth signal uses a TCI state that is indicated by ninth information and that is used for the sixth signal, wherein the ninth information is carried in DCI for triggering the sixth signal;
or
the sixth signal uses a TCI state that is indicated by tenth information and that is used for the sixth signal, wherein the tenth information is used for activating or indicating a TCI state.

53. The method according to claim 30, wherein the first indication information is carried in target DCI, and the first indication information indicates a plurality of TCI states by indicating a first code point, or the first indication information indicates one TCI state by indicating a second code point, wherein a MAC CE for activating a TCI state comprises the first code point and the second code point, and a TCI state corresponding to the first code point is one of the following:
a plurality of joint TCI states;
a plurality of pairs of TCI states, wherein each pair of TCI states comprises a downlink DL TCI state and an uplink UL TCI state;
at least two separate DL TCI states;
at least two separate UL TCI states;
at least one joint TCI state and at least one pair of separate TCI states;
at least one joint TCI state and at least one separate DL TCI state;
at least one joint TCI state and at least one separate UL TCI state;
at least one pair of separate TCI states and at least one separate DL TCI state;
at least one pair of separate TCI states and at least one separate UL TCI state; or
at least one separate DL TCI state and at least one separate UL TCI state; and
a TCI state corresponding to the second code point is one of the following:
a joint TCI state;
a DL TCI state and a UL TCI state;
a separate DL TCI state; or
a separate UL TCI state.

54. The method according to claim 30, wherein a MAC CE for activating a TCI state comprises a third code point, and a TCI state corresponding to the third code point is one of the following:
a joint TCI state;
a DL TCI state and a UL TCI state;
a separate DL TCI state; or
a separate UL TCI state; and
the first indication information is carried in target DCI, the target DCI comprises one or more pieces of DCI, and the first indication information indicates a TCI state in at least one of the following manners:
in a case that the DCI comprises one indicator field and the indicator field indicates the third code point, the first indication information indicates one TCI state by using one piece of DCI;
in a case that the DCI comprises a plurality of indicator fields and each indicator field indicates one third code point, the first indication information indicates a plurality of TCI states by using one piece of DCI;
in a case that the DCI comprises a plurality of indicator fields and only one of the plurality of indicator fields is effective, the first indication information indicates one TCI state by using one piece of DCI; or
in a case that the DCI comprises a plurality of indicator fields and the plurality of indicator fields indicate a same third code point, the first indication information indicates one TCI state by using one piece of DCI.

55. The method according to claim 53 or 54, wherein a target code point comprises the first code point, the second code point, or the third code point, a TCI state corresponding to the target code point has an association relationship with identification information, and the association relationship is determined based on at least one of the following:
an association relationship between an arrangement order of the TCI state corresponding to the target code point and the identification information;
an association relationship between a location of the TCI state corresponding to the target code point and the identification information;
an association relationship between a TCI state pool in which the TCI state corresponding to the target code point is located and the identification information;
an association relationship between the target code point activated by the MAC CE and the identification information; or
an association relationship between the TCI state corresponding to the target code point indicated by the target DCI and the identification information.

56. The method according to claim 30, wherein in a case that the first indication information is used for indicating a plurality of TCI states and each TCI state corresponds to one piece of identification information, the target TCI state of the target signal comprises: a TCI state, among the plurality of TCI states, that is indicated by third indication information and that is used for the target signal, wherein the third indication information is used for activating or indicating a TCI state.

57. The method according to claim 30, wherein in a case that the first indication information is used for indicating one TCI state and third indication information indicates that the TCI state is used for the target signal, the target TCI state of the target signal comprises the TCI state, wherein the third indication information is used for activating or indicating a TCI state.

58. The method according to claim 33, wherein the identification information comprises at least one of the following:
channel group identification information;
CORESET group identification information;
CORESET identification information;
PUCCH resource group identification information;
CORESET pool identifier;
PCI;
a TCI state identifier;
an identifier of an antenna panel of a terminal;
an identifier of a capability value of the terminal; or
an identifier of a capability value set of the terminal.

59. A beam information determining apparatus, comprising:
a receiving module, configured to receive first indication information from a network-side device, wherein the first indication information is used for indicating at least one transmission configuration indicator TCI state; and
a determining module, configured to determine a target TCI state of a target signal from the at least one TCI state in a case of determining to use a TCI state indicated by the first indication information for the target signal, wherein the target TCI state is used for determining common beam information of the target signal.

60. A beam information determining apparatus, comprising:
a sending module, configured to send first indication information, wherein the first indication information is used for indicating at least one transmission configuration indicator TCI state; and
a determining module, configured to determine a target TCI state of a target signal from the at least one TCI state, wherein the target TCI state is used for determining common beam information of the target signal.

61. A terminal, comprising a processor and a memory, wherein the memory stores a program or instructions capable of running on the processor, and when the program or instructions are executed by the processor, the steps of the beam information determining method according to any one of claims 1 to 29 are implemented.

62. A network-side device, comprising a processor and a memory, wherein the memory stores a program or instructions capable of running on the processor, and when the program or instructions are executed by the processor, the steps of the beam information determining method according to any one of claims 30 to 58 are implemented.

63. A readable storage medium, wherein the readable storage medium stores a program or instructions, and when the program or instructions are executed by a processor, the steps of the method according to any one of claims 1 to 58 are implemented.
